# EUROPEAN PATENT SPECIFICATION

(11) **EP 0 633 452 B1**
(45) Date of publication and mention of the grant of the patent: **05.01.2000**
(21) Application number: 94110408.5
(22) Date of filing: 05.07.1994
(51) Int. Cl.: G01C 21/20

(54) **Navigation system**
Navigationssystem
Système de navigation

(30) Priority: 07.08.1993 JP 21496393; 07.07.1993 JP 19284293; 07.08.1993 JP 21496593
(43) Date of publication of application: 11.01.1995
(73) Proprietor: AISIN AW CO., LTD., Anjo-shi Aichi 444-1192 (JP)
(72) Inventor: Morimoto, Kyomi, Nishio-shi, Aichi 445 (JP); Sumiya, Koji, Nishio-shi, Aichi 445 (JP); Ogawa, Ryoji, Kasugai-shi, Aichi 486 (JP); Ohara, Shigekazu, Yata-Cho, Chiryu-shi, Aichi 472 (JP); Moroto, Shuzo, Nagoya-shi, Aichi 444 (JP); Nimura, Mitsuhiro, Okazaki-shi, Aichi 444 (JP)
(74) Representative: VOSSIUS & PARTNER

(56) References cited:
- GB-A- 2 213 297
- PATENT ABSTRACTS OF JAPAN vol. 17, no. 474 (P-1602) 27 August 1993 & JP-A-05 113 750 (FUJITSU TEN LTD) 07 May 1993

## Description

The present invention relates to a navigation system for guiding a vehicle to a destination via a predetermined route and, more particularly, to a navigation system having such a data structure as to incorporate the map data for indicating the detail at and around a place position such as a present position or a transit position, when this position is to be set, selectively into the large section map data.

In the prior art, the navigation system guides the route so that the user may safely call at an inexperienced destination by car. In recent years, various technologies have been developed together with various methods to improve the performances and functions such as the precision, operability and visibility of the navigation. This navigation system is equipped with a screen to be used for setting a destination when the route is to be set and a display screen to be opened automatically or upon the demand of the driver. The display screen after the guidance is started includes a section map for guiding a wide area covering several sections including the section of the entire route, in which the car is running, and an intersection map for guiding the car at intersections.

Some navigation provides the information the uncovered distance, name and turning direction of the intersection, at which the car should turn, so as to cause no error in the run on the route, teaches the characteristic object so as to allow the driver to confirm the route during the run, and guides the route not only by the display but also in a voice.

For this navigation system to set the route, it is necessary to input the starting point and the destination. When these two points are determined by the inputting, the route retrieval processing is executed from the road information data at and around the points and between the points so that the most proper route is determined from a plurality of routes. There have been proposed: a system, in which the registered object position such as the starting point or the destination is divided and encoded into genres such as sight-seeing places, parking areas, restaurants or into the areas such as prefectures or cities so that these codes are inputted; a system, in which a menu is displayed in addition to the inputting of the code numbers so that the user may select the items sequentially from the menu and input the selected item, a system, in which the position is inputted in terms of coordinates of longitudes and latitudes; and a system in which a telephone number is inputted.

These systems are exemplified by a telephone number inputting system, as disclosed in Japanese Patent Laid-Open No. 187898/1990, or a by-genre or code number inputting system, as disclosed in Japanese Patent Laid-Open No. 173820/1989.

In the destination inputting system of the prior art, however, the user cannot set all the intended destinations. Especially in case the house of an acquaintance is to be set as the destination, the telephone number inputting system cannot work unless the telephone number of the destination is registered. However, the telephone number of the acquaintance's house is seldom registered. Therefore, the place, which has its area (or toll number) shared with that of the house, is displayed as a representing point on the map. Since this map covers a wide range, it is difficult to specify the acquaintance's house on the map. In order to avoid this difficulty, the telephone number of the acquaintance's house may be registered to increase the quantity of data and raise the cost.

Although the code number inputting system can set the destination accurately, a number of unspecified destinations such as the acquaintance's house have to be encoded one by one so that they may be set. When the data code is inputted, moreover, the data for converting the code number into the place position information. This burdens the user seriously with the cost for the data base and the cost for a device for storing the data.

In the address inputting system, moreover, the map (i.e., the detailed map) at and around the destination is called by using the map retrieving function, and the destination is inputted on the detailed map. However, the display of the called map covers a range as wide as that of the map according to the aforementioned system so that the quantity of information displayed is limited by the physical restrictions. Thus, there arises a problem that the numerous unspecified destinations such as the acquaintance's house cannot be practically set.

JP-A-5-113750 discloses a navigation device comprising a road map and a housing map. The housing map is a more detailed map with buildings and the names and disposition of facilities. A distance judging part is provided for judging whether the distance to a destination is shorter than a specified distance. When the distance of a moving body is shorter than the specified distance the housing map is displayed. There is no display of any block numbers.

GB-A-2 213 297 discloses a motor vehicle navigation system for determining and storing optimal or relevant data for later displaying of a road network image, which is obtained from heterogeneous data collection, and for supplying the same to a data storage device in the system. The system comprises means for calling up the coordinates of prominent bearing points on or in a street - such as keypoint houses, supply connections, or the like - from the data collection in succession as data material for each street of the road network representation, and for storing therein the data material for the street. First, the data of the bearing points having the lowest and highest house numbers are called up from the heterogeneous data collection and are then stored as the beginning and end points. Second, a straight line is defined connecting the beginning and end points. Then, the distance between this straight line and another bearing point as presently called up is determined for comparison with a predetermined boundary value. If the largest bearing point distance is less than the boundary value, then only the data of the bearing points having the highest and lowest house numbers are stored as the minimum data along with the street identification while deleting or suppressing all the other bearing points of the street. If the largest distance is greater than the boundary value, then this bearing point is additionally stored as the new end point. A new straight line is defined between it and the bearing point having the lowest house number as the starting point; a further line is also defined between the new end point and the bearing point having the highest house number as the end point. This procedure will be repeated until all the distances between the beginning and end points of each straight line become less than the boundary value, thus allowing only those data of the bearing points and the street identification to be stored as relevant data for display which were found as beginning and end points. With such an arrangement, the known system enables positioning of a definite destination. It permits determination of the starting and destination points by use of particular streets and house numbers concerned, allowing data to be input correspondingly.

An object of the present invention is to provide a navigation system which is enabled to set a number of unspecified places with a simple construction. This object is solved by the features of claim 1.

By using the map data having the block number data incorporated in distinction from other data, the picture means reads out the map data from the information storage means to process and display the map screen having the block numbers when the position such as the present position, the destination or the transit point is inputted by the input means. The position is set if it is inputted on this screen.

The more detailed map at and around the position can be displayed on the second map screen in addition to the aforementioned first map screen.

According to the construction of the present invention, the numerous unspecified positions such as the acquaintance's house can be set with the compact data, and this data size reduction is advantageous in the cost. In case the construction is made by incorporating the block number data and the block pattern data, the aforementioned effect can be better improved, and the position of the acquaintance's house can be more easily located.
FIG. 1 is a block diagram showing a hardware construction of a navigation system according to the present invention;
FIG. 2 is a block diagram showing one example of the system construction of the navigation system according to the present invention;
FIG. 3(1) and FIG. 3(2) are a diagram showing the construction of one example of a destination setting menu screen and a diagram for explaining the inputting of operations when an "address" is selected at the index of a place name;
FIG. 4(1) and FIG. 4(2) are diagrams for explaining the inputting of operations when a telephone number is selected from the destination setting menu screen;
FIG. 5(1), FIG. 5(2) and FIG. 5(3) are diagrams showing examples of the constructions of screens of a detailed map and the most detailed map, and a diagram for explaining an address inputting operation:
FIG. 6 is a diagram for explaining the basic structure of an address system to which is applied the navigation system of the embodiment of the present invention;
FIG. 7 is a diagram for explaining a data structure for incorporating a block number in distinction from others;
FIG. 8 is a diagram for explaining the distinct incorporation of the block number by the index;
FIG. 9 is a diagram for explaining the distinct incorporation of the block number by an identifier;
FIG. 10 is a diagram for explaining the incorporation of the block number by mixing the index and the identifier;
FIG. 11 is a diagram for explaining the data structure for incorporating the block number and block pattern in distinction from others;
FIG. 12 is a diagram for explaining the incorporation of the block number and block pattern by the indexing;
FIG. 13 is a diagram for explaining the incorporation of the block number and block pattern distinctly by the identifier;
FIG. 14 is a flow chart showing the processing of the display of a wide section screen;
FIG. 15 is a flow chart showing the processing of the display of a block screen;
FIG. 16 is a block diagram showing one embodiment of the system construction of a navigation system to which can be inputted a destination by an area number:
FIG. 17 is a diagram showing a system construction for setting the area number or a representative area coordinate by inputting through the screen or with a voice;
FIG. 18 is a diagram showing a system construction for operationally or automatically inputting on the basis of the area number information transmitted from an information center on inquiry of a user;
FIG. 19(a) and FIG. 19(b) are diagrams showing system constructions of wired communications and optical communications for automatic settings by transmitting data such as an area number stored in an electronic note to the navigation system by inputting destination data;
FIG. 20 is a diagram for explaining the area number in case the map is divided into arbitrary lattice areas;
FIG. 21(A) and FIG. 21(b) are screen construction diagrams showing the layouts of an inputting screen when the map is divided into arbitrary lattice areas, respectively, in case the map is divided and in case the map is single;
FIG. 22 is a diagram for explaining the area number when the national map is divided into lattice areas;
FIG. 23(a) and FIG. 23(b) are diagrams showing examples of a map at a fourth division level and a layout of an inputting screen, respectively;
FIG. 24(a) and FIG. 24(b) are diagrams showing examples of a map and a layout of an inputting screen when the map is divided in the east longitude and in the north latitude;
FIG. 25 is a flow chart showing an input processing by the communication data;
FIG. 26 is a flow chart showing an area number → coordinate transformation when the map is divided into arbitrary lattice areas;
FIG. 27 is a diagram showing an example of the data construction which is used in the area number → coordinate transformation when the map is divided into arbitrary lattice areas;
FIG. 28 is a flow chart showing the area number → coordinate transformation processing when the national map is uniquely divided into the lattice areas;
FIG. 29 is a diagram showing one example of the data structure which is used in the area number → coordinate transformation when the national map is uniquely divided into the lattice areas;
FIG. 30 is a flow chart showing the area number → coordinate transformation processing when the area number is in the coordinates;
FIG. 31 is a block diagram showing a hardware construction for realizing a registered place name retrieving function;
FIG. 32 is a block diagram showing one embodiment of the system construction of a navigation system having the registered place name retrieving function;
FIG. 33 is a flow chart showing a structure of destination data a routine for retrieving the names of registered places by a plurality of pronunciations;
FIG. 34 is a data structure and a flow chart showing a routine in case the retrieval is executed by adding a character string by different genres;
FIG. 35(a) and FIG. 35(b) are one example of the layout of a screen for inputting a registered place name and a screen transition at the time of operating the screen;
FIG. 36(a) and FIG. 36(b) are diagrams showing examples of the layouts of character inputting screens, that is, a symbol inputting screen and a numeral inputting screen, which are to be opened by pushing symbol designating buttons and numeral designating buttons from the registered place name inputting screen of FIG. 35;
FIG. 37(a) and FIG. 37(b) are diagrams showing examples of the layouts of character inputting screens, which are to be opened by pushing English letter designating buttons from the registered place name inputting screen of FIG. 35, and a screen transition when a next page key or a previous page key is pushed;
FIG. 38 is a diagram showing a specific example for explaining a forward coincidence retrieval with a character string inputted;
FIG. 39(a), FIG. 39(b), FIG. 39(c), FIG. 39(d) and FIG. 39(e) are diagrams showing examples of the layouts of the registered place name display screens and the transient screens of the retrieving procedure by genres;
FIG. 40(a), FIG. 40(b), FIG. 40(c), FIG. 40(d) and FIG. 40(e) are diagrams showing examples of the layouts of the registered place name display screens and the transient screens of the retrieving procedure by urban and rural prefectures;
FIG. 41(a), FIG. 41(b), FIG. 41(c), FIG. 41(d) and FIG. 41(e) are diagrams showing examples of the registered place list display screens in the case of a large list number and the transient screens of the retrieving routine by genres;
FIG. 42(a), FIG. 42(b), FIG. 42(c), FIG. 42(d) and FIG. 42(e) are diagrams showing examples of the registered place list display screens in the case of a large list number and the transient screens of the retrieving routine by urban and rural prefectures;
FIG. 43(a), FIG. 43(b) and FIG. 43(c) are registered place name inputting screens according to another embodiment and transient screens according to the operating routine;
FIG. 44(a). FIG. 44(b), FIG. 44(c), FIG. 44(d), FIG. 44(e), FIG. 44(f), FIG. 44(g) and FIG. 44(h) are diagrams showing layouts of character inputting screens for inputting character kinds of A series, K series, H series, M series, symbols, numerals and English letters (MNOP, QRST);
FIG. 45(a). FIG. 45(b), FIG. 45(c), FIG. 45(d), FIG. 45(e). FIG. 45(f), FIG. 45(g) and FIG. 45(h) are diagrams showing layouts of character inputting screens for inputting character kinds of S series, T series, Y series and English letters (ABCD, EFGH, UVWX, YZ); and
FIG. 46(a), FIG. 46(b) and FIG. 46(c) are diagrams showing layouts of character inputting screens for inputting character kinds of N series, Wa, Wo, N and English letters (IJKL).

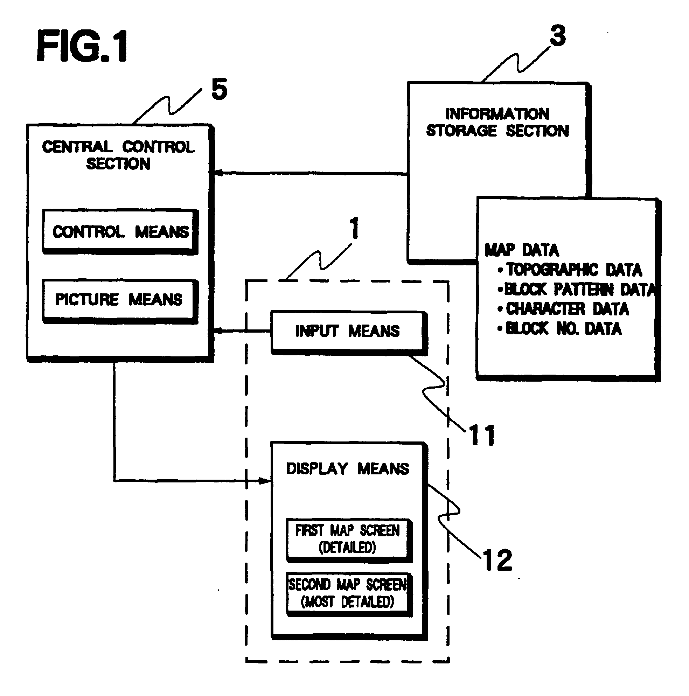

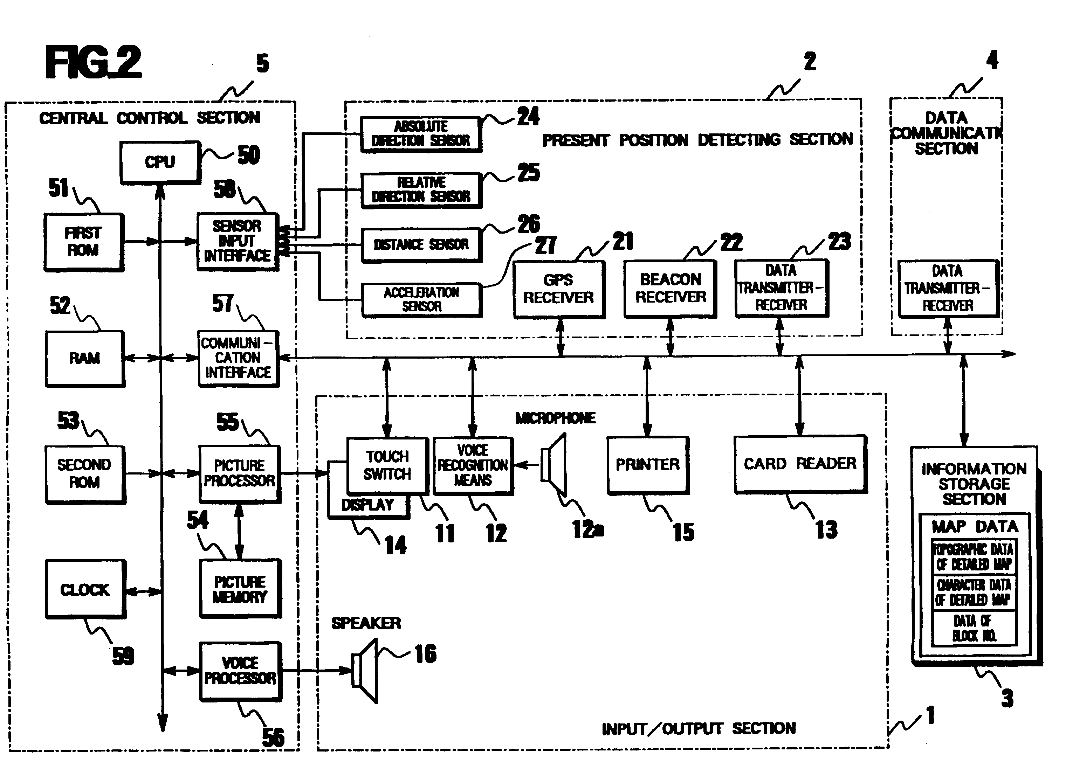

The present invention will be described in connection with its embodiments with reference to the accompanying drawings. FIG. 1 is a block diagram showing a hardware construction of a navigation system according to the present invention, and FIG. 2 is a block diagram showing one example of the system construction of the navigation system according to the present invention.

The navigation system is constructed to include: an input/output section 1 for inputting/outputting information on a route guidance: a present position detecting section 2 for detecting information on the present position of the vehicle of a user; an information storage section 3 stored with a navigation data necessary for computing the route and an indication guide data necessary for guiding the vehicle; a data communication section 4 for transmitting/receiving the navigation data with an information source such as an information center or an electronic note; and a central control section 5 for executing a route retrieval processing or an indication guide processing necessary for a route guidance and for controlling the system in its entirety.

The input/output section 1 has functions to instruct the central control section 5 the navigation processing according to the will of the user so as to input a destination and instruct and/or display the guide information with a voice or in a screen, when the driver demands it, and to output the processed data or the communication data to a printer. As the means for realizing these functions, the input section is composed of: a touch switch 11 for inputting a destination by its address, telephone number and coordinates and for requesting the route guidance; voice recognition means 12: and a card reader 13 for reading out the data which is recorded in an IC card or magnetic card. On the other hand, the output unit is composed of: a display 14 for displaying the input data on the screen and the route guidance on the screen either in response to the request of the driver or in an automatic manner; a printer 15 for printing the data processed by the central control section 5, the data stored in the information storage section, and the communication data transmitted from the information center; and a speaker for outputting the route guidance in a voice.

The display 14 is constructed of a color CRT or a color liquid crystal indicator for displaying in colors all the screens necessary for the navigation such as a destination setting screen, a section map screen or an intersection map screen on the basis of the map data and the guide data processed by the central control section 5 and for displaying a guidance that the route is being induced and buttons for switching operations. The destination setting screen is formed as at least a final detailed map with a screen for displaying a map declaring the block numbers and/or the names of narrow sections. Especially these block numbers and narrow section names used in the destination setting screen are so displayed in different colors that they can be easily recognized. This display is installed in the instrument panel near the driver's seat to enable the driver to confirm the present positions of his or hew own car and to achieve the information on the route to follow in view of the section map. Moreover, the display 14 is equipped with the touch panel 11 for displaying the function buttons so that the aforementioned operations may be executed on the basis of the signals inputted by touching the buttons. The input signal generating means composed of those buttons and touch panel constitutes the input section, although its detailed description is omitted.

The voice recognition means 12 forms part of the input signal generating means and generates a signal to be processed by the central control section 5, for example, after the user has recognized the coordinate information to be inputted in a voice through a microphone 12a.

The present position detecting section 2 is composed of: a GPS receiver 21 making use of the global positioning system (GPS); a beacon receiver 22; a data transmitter-receiver 23 making use of a cellular phone or an FM multiplex signal; an absolute direction sensor 24 made of a terrestrial magnetism sensor, for example; a relative direction sensor 25 made of a wheel sensor, a steering sensor or a gyro, for example; a distance sensor 26 for detecting the distance covered from the number of revolutions of the wheels; and an acceleration sensor 27.

The information storage section 3 is a data base which is stored with all the data necessary for the route guidance such as the map data, the display guide data and the voice guide data. Especially, the map data is so constructed that it can incorporate the block number data or the block pattern data necessary for practicing the present invention. These data can be registered and used, if necessary.

The data communication section 4 transmits and receives the data with both the external information center, which is stored with massive route guiding information for giving the route guiding information in response to the request of the user. and the information storage medium (or data storage means) such as the electronic note or IC card which is stored in advance with the destination information by the user so as to input the position coordinates. Here, the data communication section 4 has its data transmitter-receiver made of various communication means in accordance with the specification of the system. In the present embodiment, for example, the data communication section 4 is composed of a radio wave transmitter 4a, a radio wave receiver 4b, a wired communication receiver 4c and an optical communication receiver 4d.

The central control section 5 is composed of: a CPU 50 for executing the processing operations; a first ROM 51 stored with a program for processing the route retrieval, a program for executing a display control necessary for the route guidance and a voice outputting control necessary for a voice guidance, and data necessary for the programs; a RAM 52 to be temporarily stored with the route guiding information retrieved and the data being processed; a second ROM 53 stored with the display information data necessary for the route guidance and the map display; a picture memory (VRAM) 54 stored with the picture data to be used for displaying the screen; a picture processor 55 for fetching the picture data from the picture memory on the basis of the display control signal coming from the CPU, to process and output the picture data to the display; a voice processor 56 for synthesizing the voice, phrase, sentence and sound read out of the information storage section 3 on the basis of the voice output control signal coming from the CPU, to convert them into analog signals and output the signals to the speaker; a communication interface 57 for transferring the input/output data through communications; a sensor input interface 58 for fetching the sensor signal of the present position detecting section 2; and a clock 59 for introducing the date or time into the internal diagnostic information. Here, the route guidance is so constructed that the driver can select either the screen display or the voice output.

The present system determines the present position by computing a presumed position on the basis of the various sensor signals and GPS data coming from the present position detecting section and by deciding the position on the road of the map from the correlation between the presumed position, and the road and the GPS data. Here, if the correlation to the road data indicated by the map is poor, the present position is not indicated on the road illustrated in the map.

Moreover, the present system has a function to judge whether or not the present place is approaching a predetermined guide point in relation to the position of the vehicle on the lane with reference to the course to the destination. By this function, specifically, the timing for automatic outputting of a voice of a predetermined distance to an intersection on the guide route or a decision of transit of the intersection or for outputting the indication of intersection information such as the name of the intersection passed is judged. On the basis of this judge result, the present system instructs the picture processor and the voice processor of the guidance. In response to a request signal, moreover, the present system instructs the voice processor of the voice guidance of the present place.

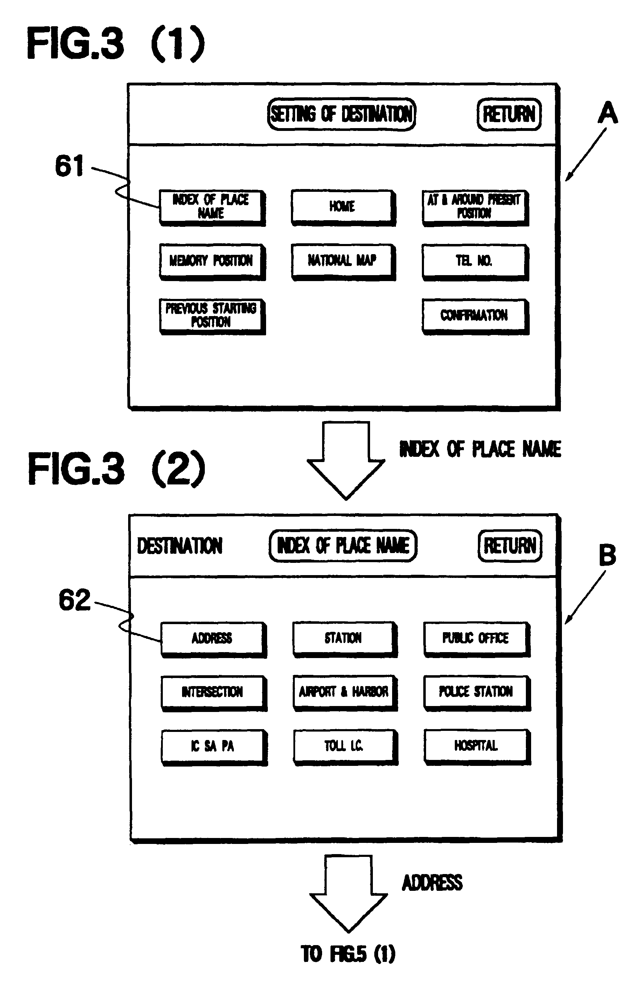

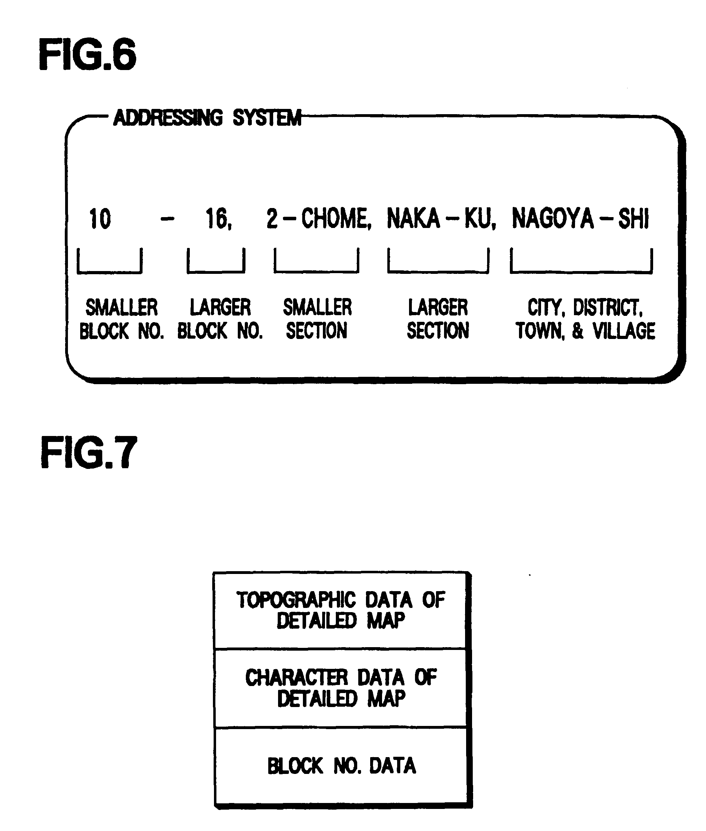

Here will be described the position setting of a destination by using the most detailed map that declares the names of small sections and the numbers of blocks. FIG. 3 to FIG. 5 are examples of the constructions of destination setting screens for realizing the position setting function of the present invention and the screen transitions by inputting the operations through the screens. FIG. 6 is a diagram for explaining the basic structure of an address system to which is applied the navigation system of the embodiment of the present invention. This address system is composed of the names of city, town and village, the names of larger sections, the names of smaller sections, the numbers of larger blocks, and the numbers of smaller blocks.

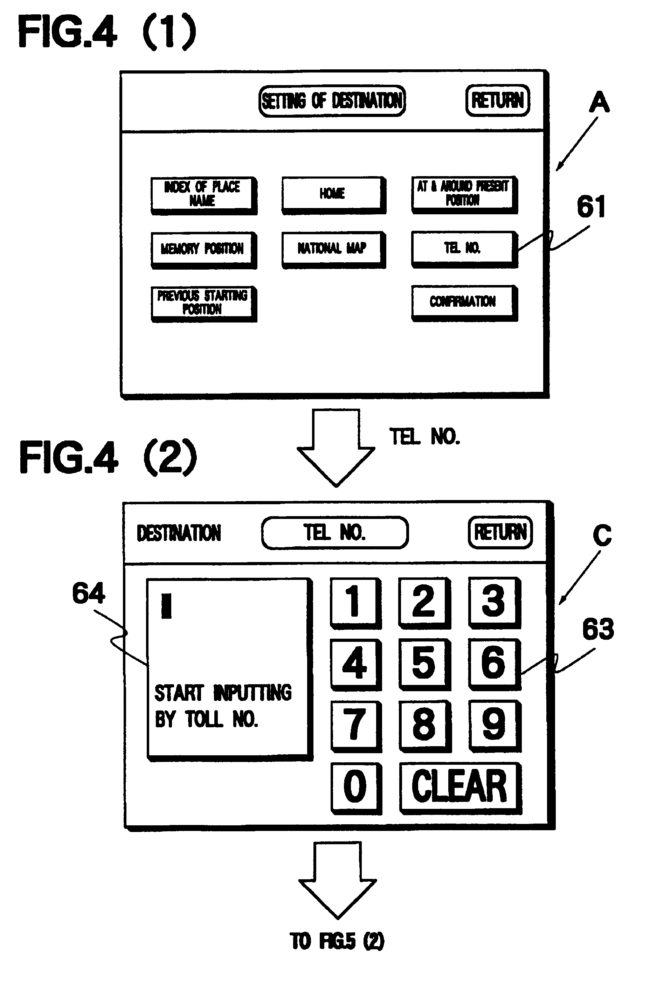

When the destination setting is selected from the menu screen, a destination setting menu screen A, as shown in FIG. 3(1) and FIG. 4(1) is opened. This destination setting menu screen A is displayed with function buttons for selecting "INDEXING OF PLACE NAME", "HOME", "AT & AROUND PRESENT POSITION", "TEL NO." and "NATIONAL MAP", for example.

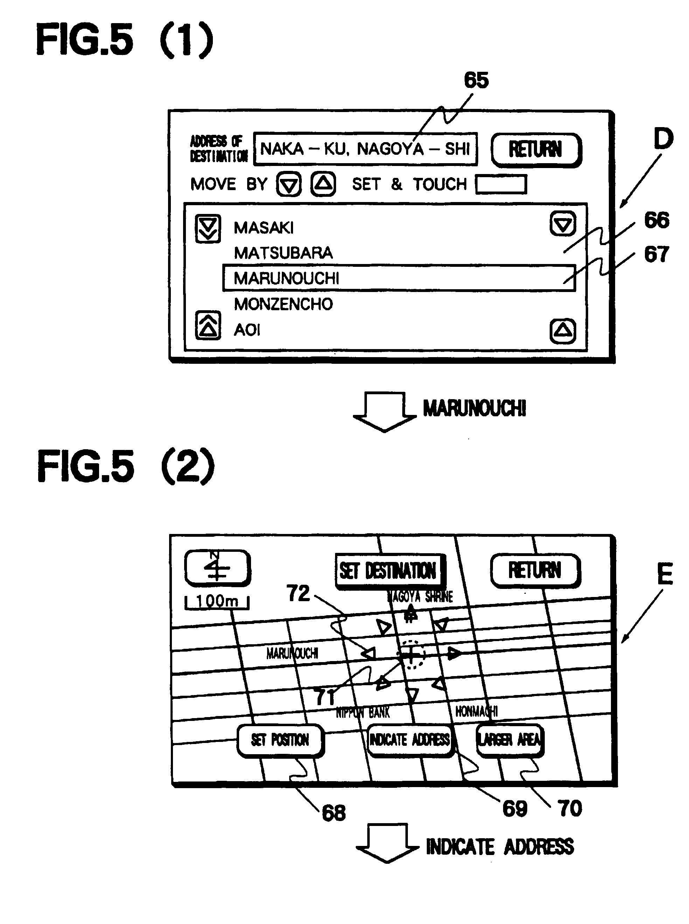

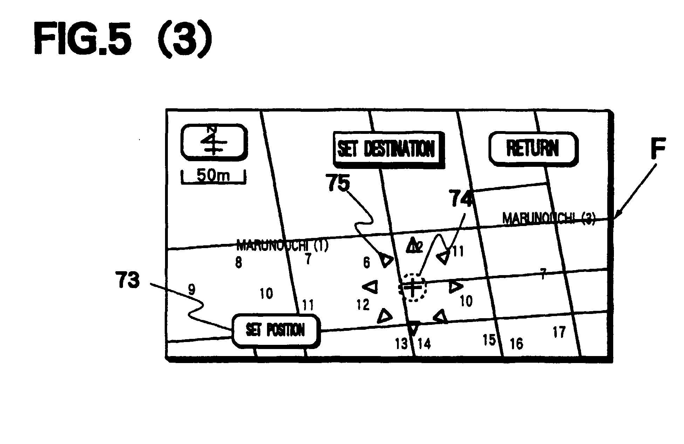

When the "INDEX OF PLACE NAME" is selected from the destination setting menu screen A, for example, a place name index selecting screen B, as shown in FIG. 3(2), is opened. If, on the other hand, the telephone number button is pushed in the destination setting menu screen A, a telephone number inputting screen C, as shown in FIG. 4(2), is opened. This screen C is formed with a ten-key 63 for inputting the telephone number and a telephone number indicating portion 64 for indicating the telephone number inputted, so that it can input the telephone number of the destination from its toll number. The place name index selecting screen B is formed with function buttons 62 for selecting the place name by genres such as addresses, stations or public offices. If the address button is pushed here, an address inputting screen D, as shown in FIG. 5(1), is opened. If, on the other hand, the telephone number is inputted from the telephone number inputting screen C, a detailed map screen E, as shown in FIG. 5(2), is opened.

The address inputting screen D is formed with an address indicating portion 65 for indicating the name of city, town or village retrieved by the place name retrieving function, and a larger section indicating portion 66 for indicating the name of a larger section by scrolling. If a cursor 67 is moved along the larger section names to touch the pertinent name, there is opened the detailed map screen E indicating the map at and around said larger section name.

As shown in FIG. 5(2), the detailed map screen E is formed with function keys including a set position button 68, an indicate address button 69 and a wide area indicating button 70. In the map, there is indicated eight cursors 72 which are concentrically and equidistantly arranged on a position mark 71. This position mark 71 can be moved in the direction of the cursor 72, if this cursor 72 is touched. If the destination can be positioned in the detailed map screen E, the position can be set by pushing the set position button 68 after having positioned the position mark 71 in the destination. Since, moreover, it is difficult to locate the destination in the larger section area in the detailed map screen E, a most detailed map screen E is used if the destination is to be positioned in a high precision. In this case, the most detailed map screen F declaring the blocks is opened if the indicate address button 69 is pushed in the detailed map screen E.

In FIG. 5(3), the most detailed map screen F displays a map having the block information composed of the smaller section names and the block numbers and is formed like the detailed map screen E with a position mark 74 and cursors 75. Thus, the position is set with the block number by moving the position mark 74 with the cursors 75 to the destination and by pushing a set position button 73. If, moreover, the block pattern is added to the block information and is displayed in the most detailed map screen, the destination can be more easily confirmed and positioned. Here, the block setting function need not be prepared at the level of the national map but may be prepared only in such a specific area as has a high user needs, for example.

The inputting operation for locating the position of a destination at the residence address, as shown in FIG. 6, by using the aforementioned destination setting screen. First of all, the "INDEX OF PLACE NAME" → THE "ADDRESS" are selected in the screens shown in FIG. 3. Then, after execution of the indexing of place name, the address inputting screen is opened, and the retrieved place name of "NAKA-KU, NAGOYA-SHI" (district, city) is indicated in the address indicating portion. Simultaneously with this, the larger section name in the NAKA-KU is indicated in the larger section indicating portion. The pertinent larger section name "MARUNOUCHI" (street) is indicated by the scrolling operation, and the cursor is moved to the "MARUNOUCHI" by operating an up/down button and is touched. Then, the detailed map screen E is opened to display the MARUNOUCHI area. Since this detailed map screen does not indicate the block numbers, the INDICATE ADDRESS button is pushed to open the most detailed map screen F. In the most detailed map screen, there are indicated in the MARUNOUCHI area the smaller sections and the block numbers: the "1-CHOME, MARUNOUCHI" (subdistrict, street) (as indicated as "MARUNOUCHI (- )" in the map); and the "2-CHOME, MARUNOUCHI" (as indicated as "MARUNOUCHI (-)" in the map). In this screen, the cursor is moved to position the position mark to the block "10", and the set position button is pushed. Thus, the position of the destination is set with the block number. Upon the route guidance, the guidance is made to the set destination block, and the house of an acquaintance, as indicated by "16" in the block, can be visited.

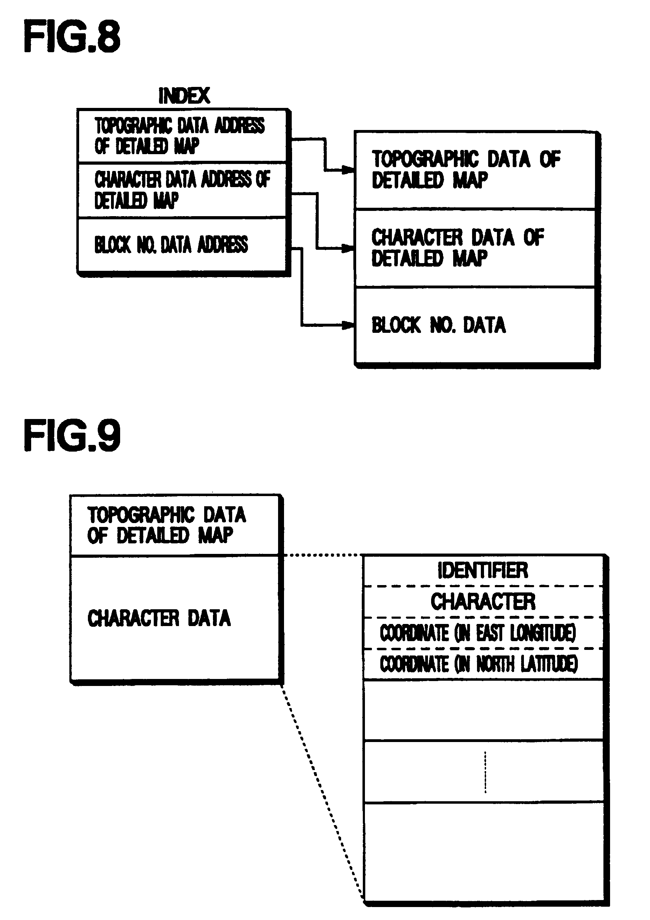

Here will be described the map data structure. FIG. 7 shows a data structure for incorporating a block number in distinction from another. FIG. 8 shows an incorporation of the block number distinguishing by the index. FIG. 9 shows an incorporation of the block number distinguishing by an identifier.

In FIG. 7, the data structure is composed of: the topographic data of a detailed map necessary for displaying a larger section area; the character data of the detailed map; and the block number data necessary for confirming the block. The method of distinguishing the block number from larger section names and marks is exemplified in the indexing case by making correspondences among the topographic data and the character data of the detailed map and the block number data and by accessing the individual data by indexing the corresponding addresses.

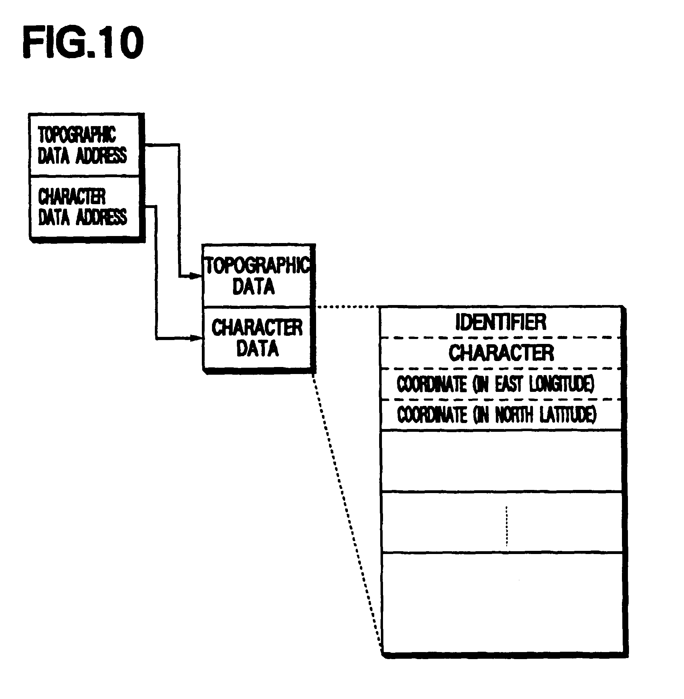

In the case of using the identifier, on the other hand, the data structure is composed of the topographic data of the detailed map and the character data, as shown in FIG. 9. Of these, the character data is composed of an identifier, a character, a coordinate in the east longitude and the coordinate in the north latitude. For example, the characters, as indicated in the detailed map, may not be indicated in the most detailed map, but only the blocks may be indicated in the most detailed map, or the marks or the like may be indicated in both the detailed map and the most detailed map. In case, moreover, the index and the identifier are mixedly used, the topographic data and the character data are made, as shown in FIG. 10, to correspond in addresses, which are used as the index to access the individual data.

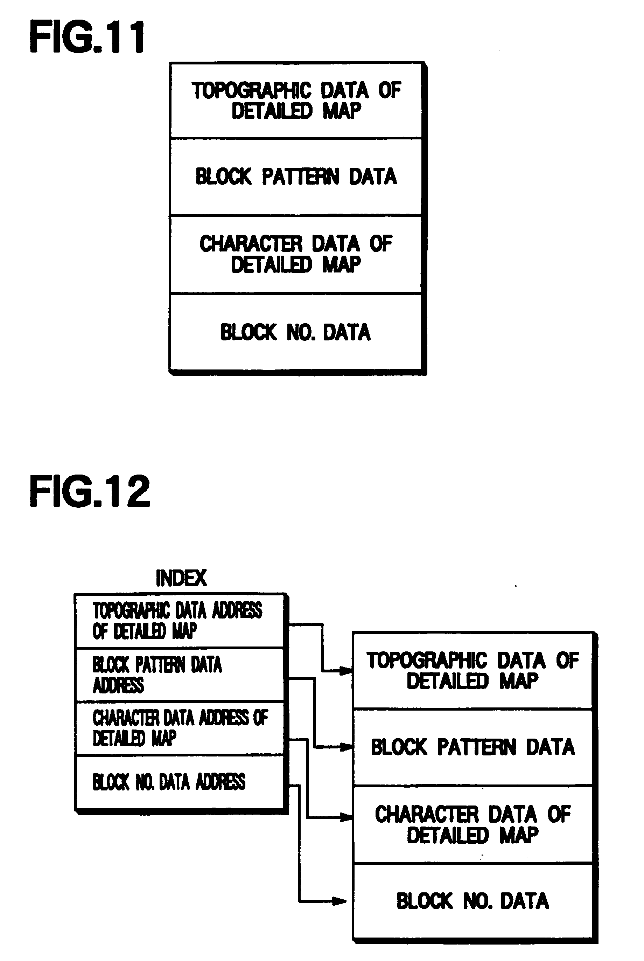

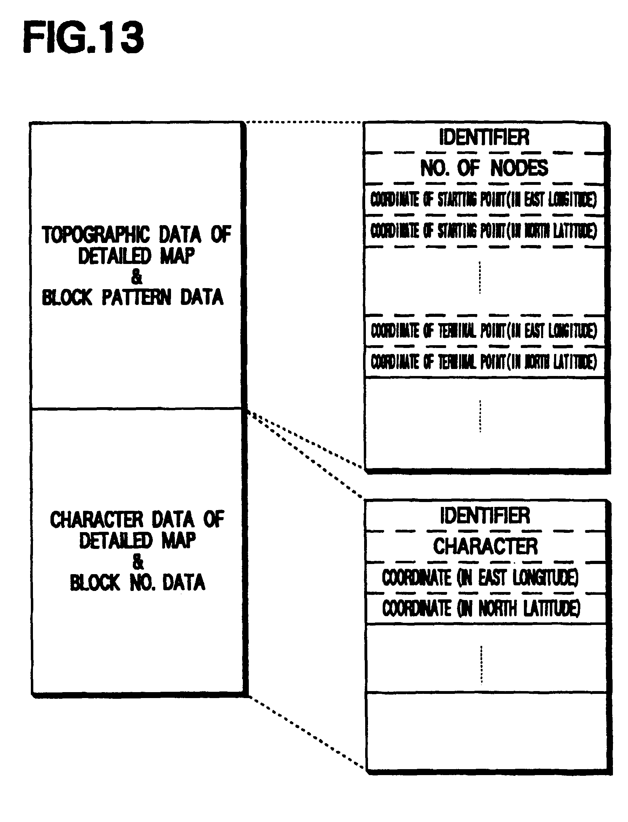

FIG. 11 shows the data structure for incorporating the block number and block pattern in distinction from others. FIG. 12 shows the incorporation of the block number and block pattern by the index. FIG. 13 shows the incorporation of the block number and block pattern distinctly by the identifier.

In FIG. 11, the data structure is composed of: the topographic data and the character data of the detailed map necessary for displaying the larger section area; and the block pattern data and the block number data necessary for confirming the block. The method of distinguishing the block number and the block pattern from others is exemplified in the indexing case by making correspondences among the topographic data of the detailed map, the block pattern data, the character data of the detailed map and the block number data in addresses, which are indexed to access the individual data, as shown in FIG. 12.

In the case of using the identifier, on the other hand, the data structure is composed of the topographic data of the detailed map, the block pattern data, the character data of the detailed map and the block number data, as shown in FIG. 13. The topographic data and the block pattern data are expressed by the identifier, the node number and the coordinates from the starting point to the terminal point in both the east longitude and the north latitude, whereas the character data and the block number data are expressed by the identifier, the character and the coordinates in the east longitude and the north latitude. Here, the data structure for incorporating the block number and the block pattern distinctly from others can be modified into the data structure having the mixture of the index and the identifier, as shown in FIG. 10.

Thanks to these data constructions, the retrieval response is accelerated in the case of using the index. In the case of using the identifier, on the other hand, the amount of data can be reduced because no double registration is required unlike the index type in the presence of the data to be displayed in both the detailed map and the most detailed map. Moreover, what is displayed only in the detailed map can also be displayed in the most detailed map by changing not the data but the processing software.

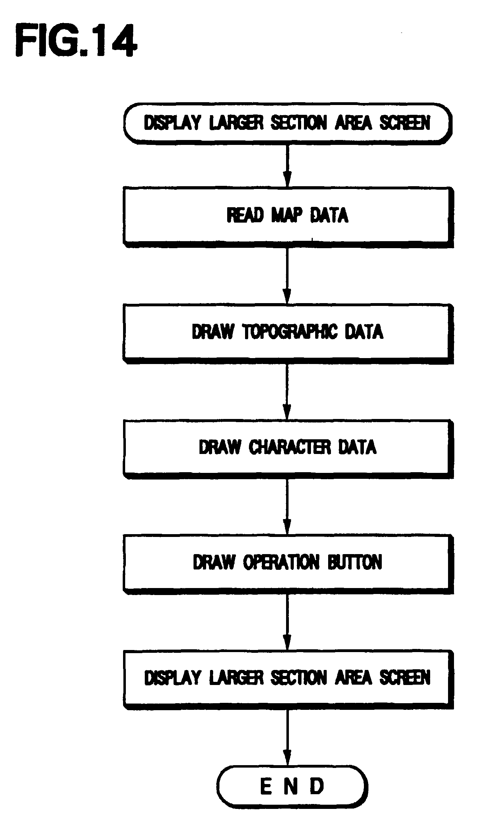

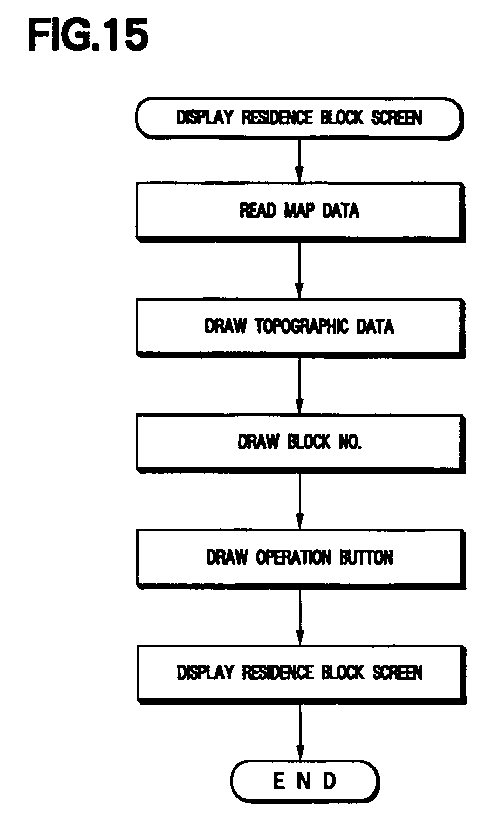

Here will be described the display processing in the position setting function by the address inputting method. FIG. 14 shows the processing flow for displaying the larger section area. FIG. 15 shows the processing flow for displaying the blocks in the screen.

When the cursor 67 is moved to the larger section name and is touched, as shown in FIG. 5(1), the processing routine for displaying the larger section area in the screen is started. First of all, the map data is read out of the external information storage section 3 to process the individual drawing operations of the topographic data, the character data and the operation buttons sequentially so that the detailed map E of the larger section area is displayed in the screen. When the indicate address button 69 is pushed in the detailed map E, the processing routine for the block screen display is started to load the map data. The topographic data, the block number and the operation buttons are sequentially drawn by that map data so that the most detailed map F of the blocks is displayed in the screen.

Although the present embodiment should not be limited to the display mode of character information, the block numbers may be indicated distinctly in a color different from others so that the character information may become more visible, because the character information to be used in the most detailed map will increase. Moreover, the characters and the block numbers in the detailed map may be indicated in different colors.

If, moreover, the character data is not indicated in the detailed map but the block numbers and the smaller section names in the block number data are indicated in different colors, it is possible to prevent the reduction in the visibility due to the overlap of characters and to avoid such a confusion as might otherwise be caused due to the fact that the character data indicated in the detailed map and the character data indicated in the most detailed map are displayed at the same time and in the same position. Still moreover, not only the characters but also symbols may be indicated as the character information.

With reference to the accompanying drawings, here will be described the function to set the position data by dividing the map into a plurality of areas and by inputting the area numbers of the individual areas and the coordinates of an area representing position through operations or communications.

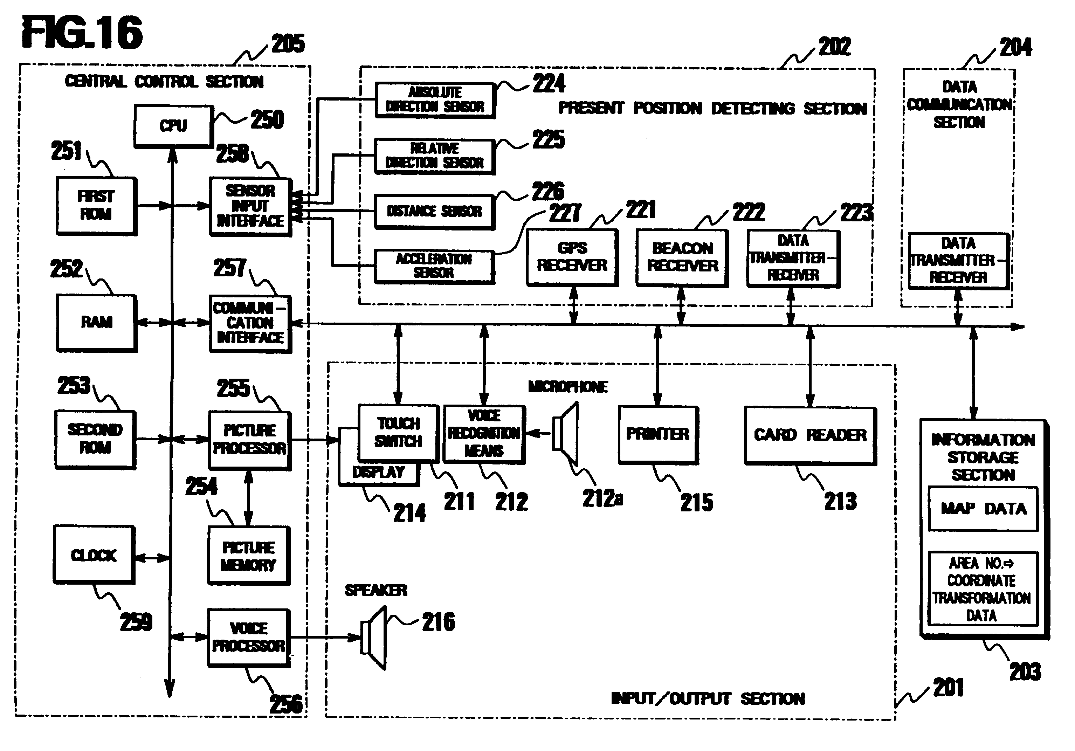

FIG. 16 shows a system construction of a navigation system having a position setting function using the absolute coordinates. The navigation system is constructed to include: an input/output section 201 for inputting/outputting the information on the route guidance; a present position detecting section 202 for detecting the present position of the vehicle of a user; an information storage section 203 stored with all the data necessary for the route guidance such as the map data, the indication guide data, the voice guide data and the data to have its coordinate transformed from the area number; a data communication section 204 for transmitting/receiving the navigation data with an information source such as an information center or an electronic note; and a central control section 205 for executing a route retrieval processing or an indication guide processing necessary for a route guidance and for controlling the system in its entirety.

The components appearing in FIG. 16 and having the same functions as those of the components of FIG. 2 will not be described here.

Here will be described the position setting function of the present system using the area number or the coordinate of the area representing point. The acquisition of the area number of the destination can use the memory means such as an atlas, an information center or an electronic note. Moreover, the area number or the coordinate of the area representing point thus acquired is inputted to the coordinate transforming means for transformations from the area number to the coordinate by the operations through the screens or voices or by radio-wave communications, wired communications or optical communications.

The coordinate transforming means realizes the software processing of the central control section 205 and acquires the coordinates of the area representing point from the area number inputted, through a transformation table or by operations thereby to indicate the coordinates on the map of the display. The indication of the point is selected from the indication of the block representing point, the indication of the block area or the indication of the combination of the block representing point and the block area.

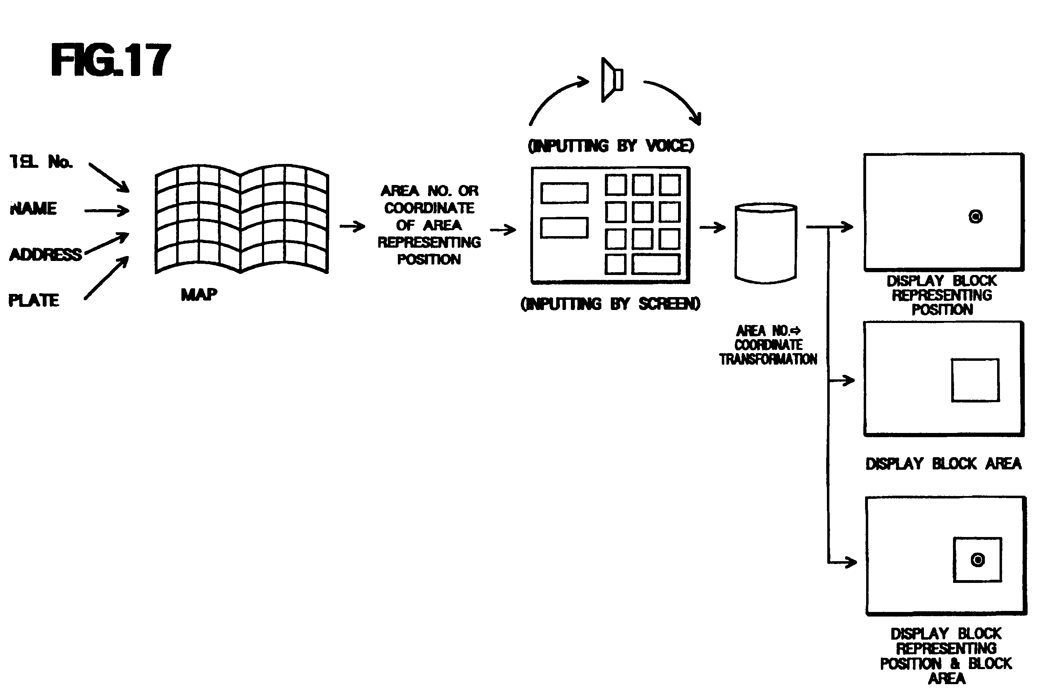

FIG. 17 shows a system construction for setting the position coordinates from the area number by the screen or voice inputting. The atlas is formed with unique numbers (as will be called the "area numbers") at every sections enclosed by longitudinal and horizontal lines, for example. In case the destination is to be positioned, which area the destination belongs to is specified by the telephone number, the name, the address of the destination, and the place, and the area number of the destination is fetched. It is advisable to attach the list having correspondences among the telephone numbers or names, the area numbers and the page numbers to the atlas.

In case the coordinates of area representing points are individually determined in advance, there are fetched the coordinates of the representing point of the area containing the destination. When the area number or the area representing point coordinates (as will be called the "area number or the like") thus fetched is inputted through the screen or the voice, the coordinate transforming means acquires the coordinate transformation table in the case of the area number or the coordinate data by the computations in the case of the area representing point coordinates, so that the display processing is executed with the coordinate data and the map data. In the display of the input/output section, there is displayed the map containing the destination, on which the display is made in either mode shown in FIG. 17. Here, the coordinate transforming means is constructed of the central control section and the information storage section, as shown in FIG. 16.

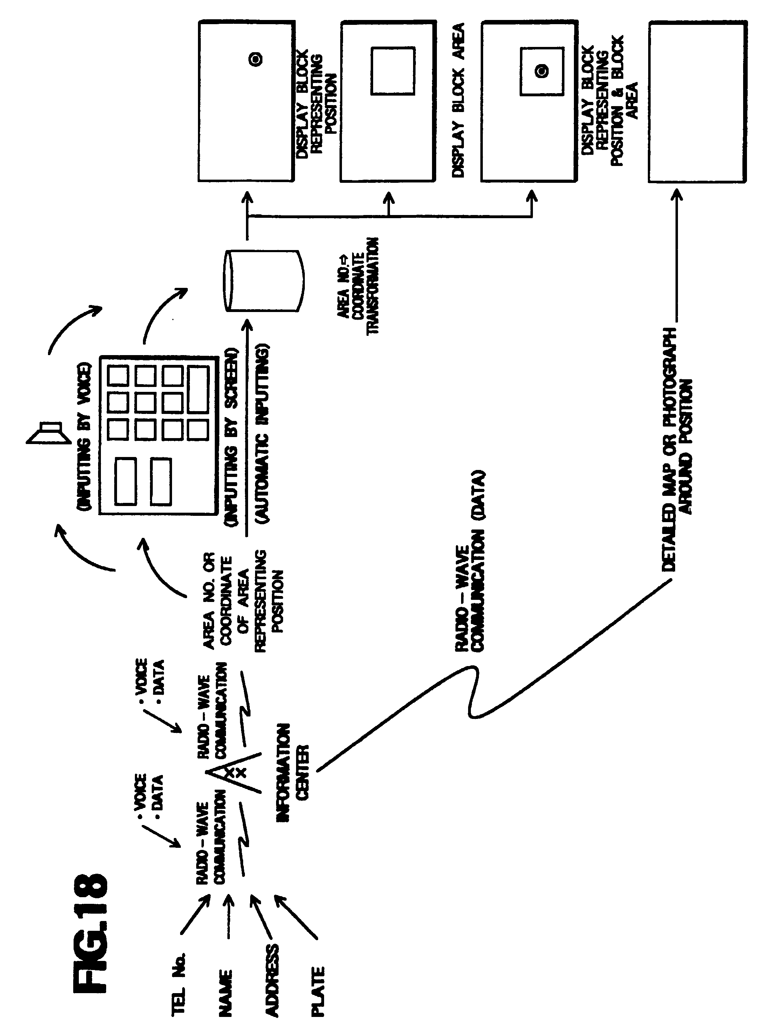

FIG. 18 shows a system construction for inputting the area information transmitted from an information center on inquiry of a user. The information center is usually set up as a stationary station and given functions to store the data necessary for the navigation and to provide the necessary data if demanded by the user. The user transmits the destination information such as the telephone number, the name, the address and the place to the information center-by the telephone or in the form of data through the radio-wave communications. The information center provides the data on the area number, the area representing point coordinates or the area size, as demanded. in the voice or data through the radio-wave communications so that the user may input the area number or the like in the voice or the screen. In case, on the other hand, the navigation system is equipped the global positioning function through communications, the data such as the area number or the like transmitted from the information center is received (or automatically inputted). On the basis of the area information data thus inputted by those inputting methods, the coordinates are computed according to the position of the area, which is selected with reference to the lower lefthand coordinate of the atlas containing that area, and the size of the section, and the position is indicated by processing the indication of the result. Concurrently with these operations, moreover, the data of the detailed map at and around the position or the photographic data may be transmitted from the information center so that it may be used as a reference one for guiding to the destination when the vehicle arrives around the destination.

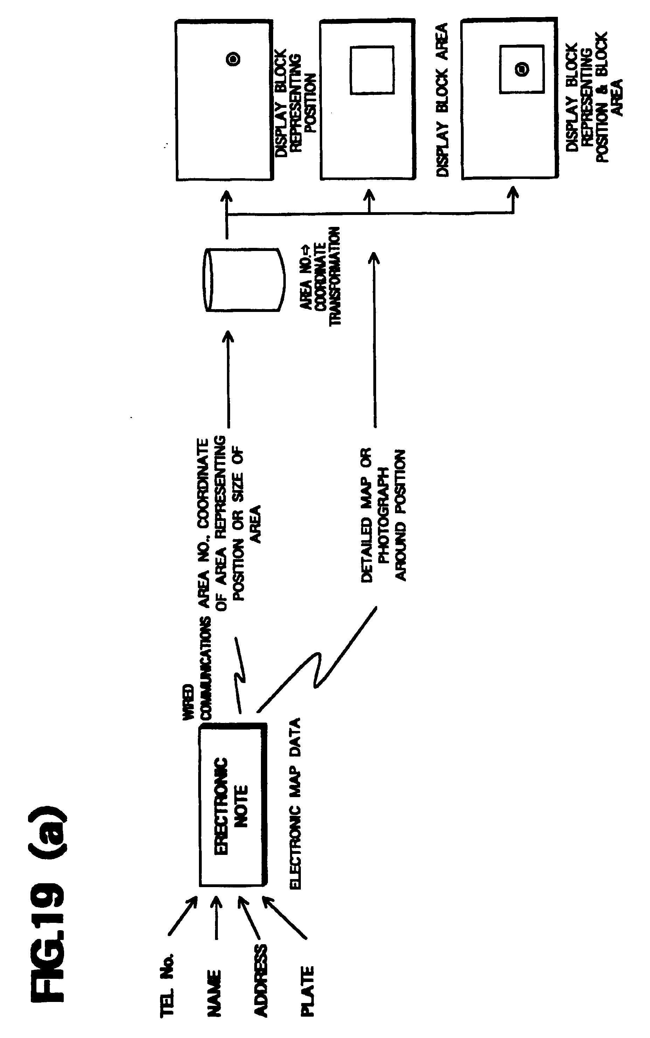

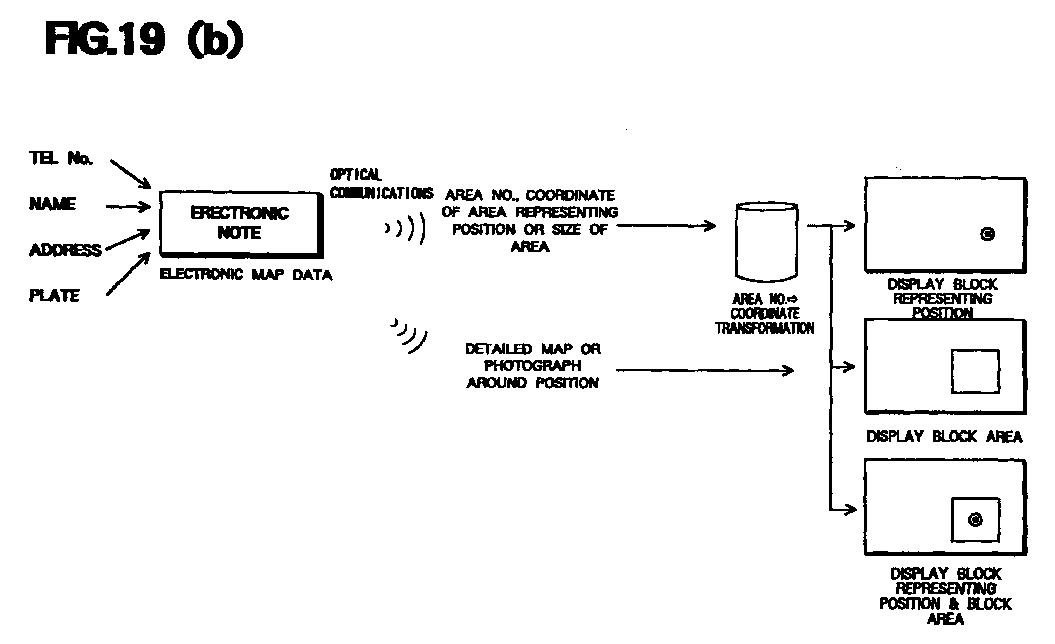

FIG. 19(a) and FIG. 19(b) are diagrams showing system constructions of wired communications and optical communications for automatic inputting by transmitting data such as the area number or the like from the electronic map data stored in the electronic note to the navigation system, by inputting the destination data. The electronic note is equipped as its major components with: an input section for the destination data; a storage section stored with the data such as the area number or the like corresponding to the destination data, and the electric map data; a central control section for fetching the data such as the area number or the like from the destination data inputted; and a communication section for transmitting the data such as the area number or the like fetched.

The communication section either transmits the data such as the area number or the like by connecting the electronic note and the navigation system through a communication cable, as shown in FIG. 19(a), or transmits optical data by arranging a light emitter at the side of the electronic note and a light receiver at the side of the navigation system, as shown in FIG. 19(b), and by converting the data such as the area number or the like into the optical data. In case the point coordinates of the destination are to be set, the data such as the area number or the like is outputted to the navigation system when the destination data is inputted to the electronic note. The navigation system acquires the point coordinates from the data such as the area number or the like inputted and indicates the block representing point or the block area on the map or photograph by processing the display of either the data at or around the point of the detailed map or the photographic data transmitted from the electronic note when the vehicle arrives at or around the destination.

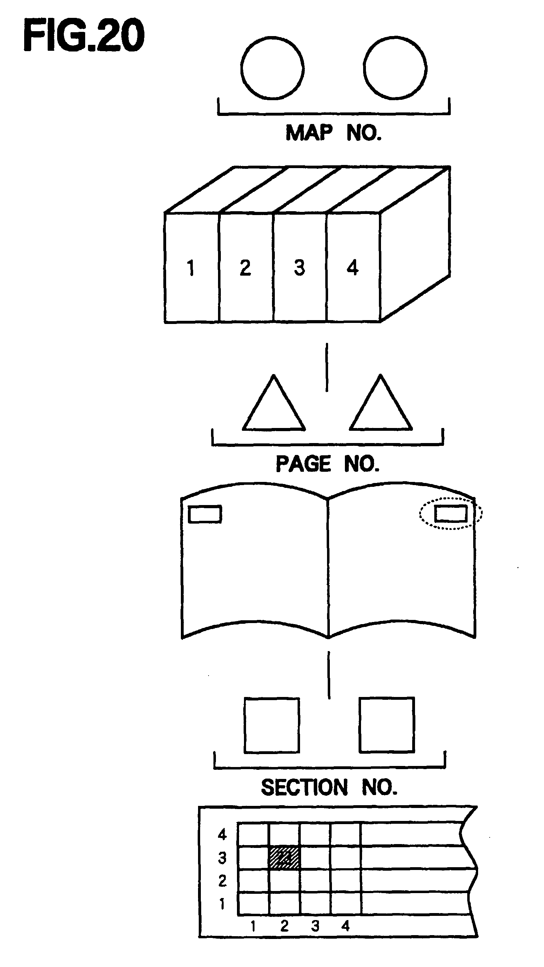

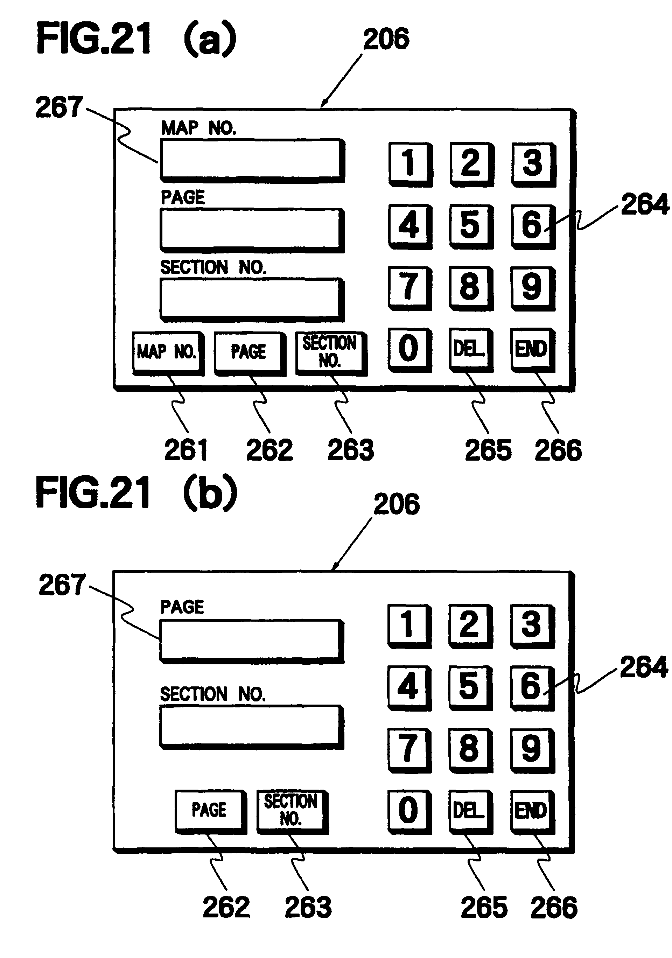

Here will be described the operations of inputting the area number. FIG. 20 shows a specific example for fetching the area number when the map is divided into arbitrary lattice areas. FIG. 21 shows one example of the layout of the area number inputting screen, that is, a fundamental screen formed with function keys necessary for inputting the area number.

In the embodiment of FIG. 21(a), the area number is made unique by the three pieces of information (as will be called the "area number"): the number (i.e., the map number) of an atlas divided for the individual areas; the page number indicating which page of the specified atlas the area resides on; and the section number indicating which section of the specified page the area resides in.

An input screen 206 for this unique area number is formed with function keys for inputting at least the map number, the page and the section number individually. This screen is formed with: the function keys composed of a map number key 261, a page number key 262 and a section number key 263 for the inputting operations; a tenkey 264 for inputting the destination data; a delete key 265 for deleting the input data; an end key 266 for ending the inputting; and an indication portion 267 for indicating the input data of each function key selected. Incidentally, the screen is further formed with a message indicator for the inputting operations, which is omitted here.

The map number, the page number and the section number are sequentially inputted in this screen 206, and the end key 266 is pushed. Then, the destination data is set and is displayed in a display 214 after it has been processed together with the map data. In this embodiment, the description has been made on the premise that the map number, the page number and the section number are inputted correctly in the recited order, but this order may be changed. In case. moreover, the atlas is made of or limited to one volume by some means, the destination data can be set by inputting only the page number and the section number, as shown in FIG. 21(b).

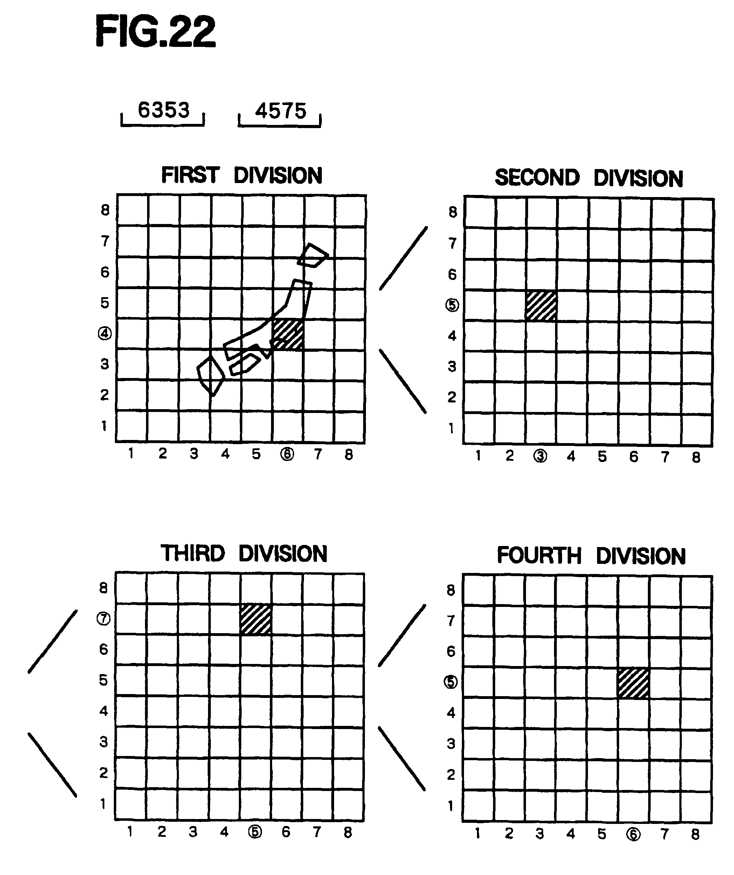

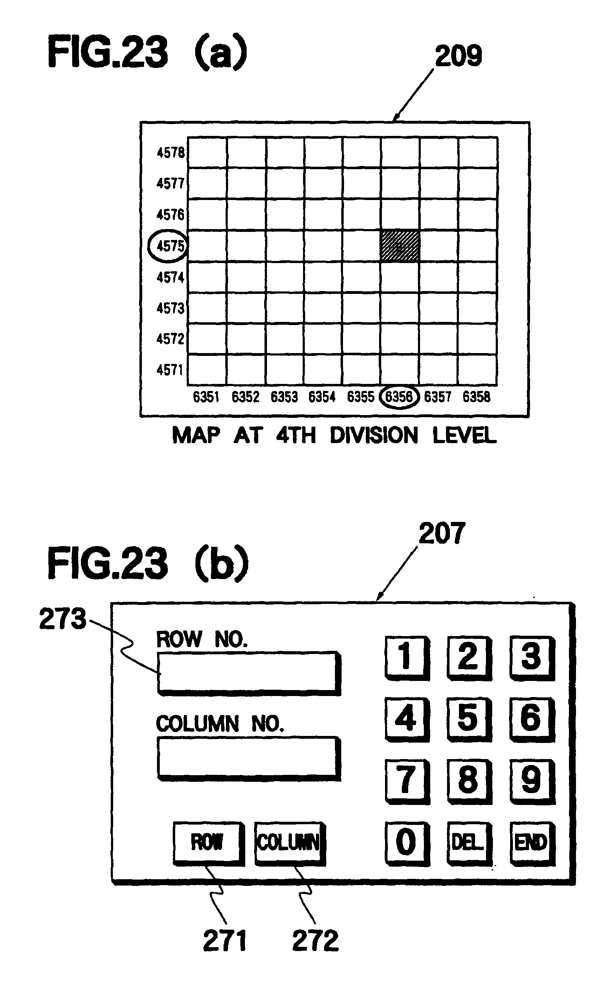

FIG. 22 shows a specific example for extracting a section number by dividing the national map into lattice areas. FIG. 23(a) shows one example of the construction of the map at the divided level, and FIG. 23(b) shows one example of the layout of an area number inputting screen. In the present embodiment, the national map is divided into 8 x 8 blocks, each of which is further divided into 8 x 8 blocks, which is further divided into a plurality of blocks (or sections) to characterize the area numbers. As a result, these area numbers are expressed by a sequence of numbers equal to those of the divided blocks, that is, by a column sequence and a row sequence. In the map at the 4th division level, as shown in FIG. 23(a), the section position in a quarter map 209 is expressed by arranging the row and column numerals in the order of division and by expressing the sequence in the rows and columns.

Here will be described the area number, for example, as expressed by a row sequence "6356" and a column sequence "4575". The area is located in the national map (i.e., the 1st division) at blocks of "six" rows and "four" columns (i.e., 6 x 4 blocks), in the map divided from the 6 x 4 blocks (i.e., the 2nd division) at the 3 x 5 blocks, in the map divided from the 3 x 5 blocks (i.e., the 3rd division) at the 5 x 7 blocks, and in the map divided from the 5 x 7 blocks (i.e., the 4th division) at the 6 x 5 blocks.

In case the national map is thus divided four times, the area number can be extracted by the atlas 209 shown in FIG. 23(a), which is prepared for each block noted in the national map. The section (as hatched) including the destination is designated by inputting as its number the circled numerical values of the row "6356" and the column "4575" from the atlas 209 into the screen. An input screen 207, as shown in FIG. 23(b), has its fundamental construction formed with: function keys of a row key 271 and a column key 272 for inputting the row and column numerical values, as indicated in the map; and section number indication portions 273 for indicating the row number and the column number inputted. The remaining construction is identical to that shown in FIG. 21. The inputting operations through this screen are carried out by inputting the column and row section numbers while observing the atlas, and the setting is ended by pushing the end key.

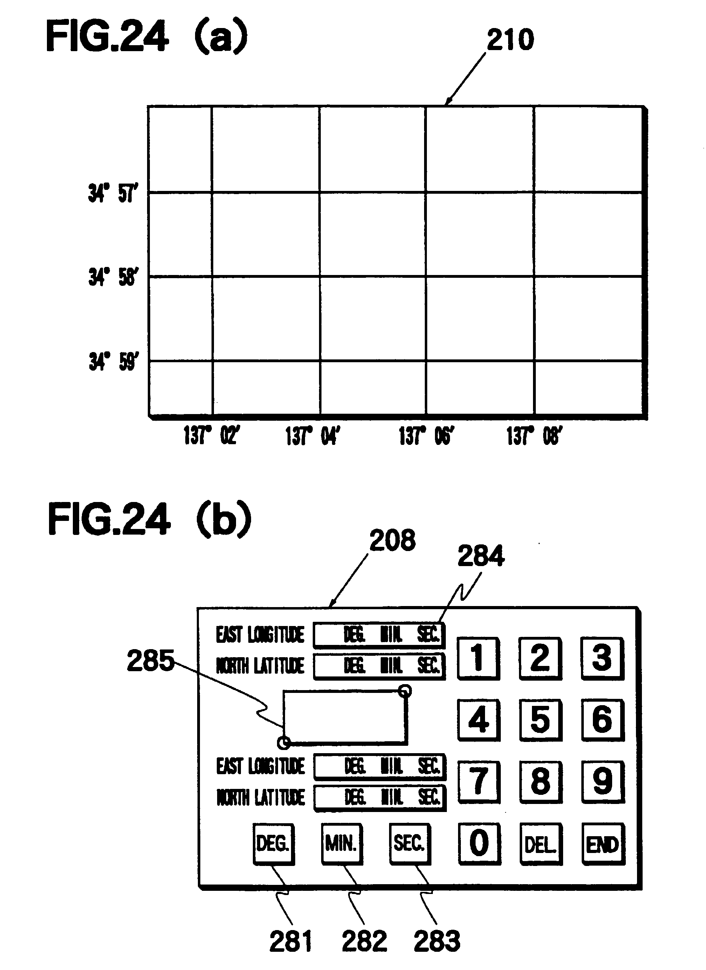

FIG. 24(a) is an atlas having the longitudes and latitudes indicated therein, and FIG. 24(b) shows an example of the layout of a screen for inputting the sections divided by the longitudes and latitudes. An atlas 210 has longitudes and latitudes indicated therein, and the absolute coordinates (in longitudes and latitudes) of four points are used in the orthogonal coordinate system in case the destination is to be extracted in the form of a rectangular area. Here, the area of the destination is specified by inputting the diagonal coordinates of a rectangle through the inputting screen.

The inputting frame 208, as shown in FIG. 24(b), has its fundamental construction equipped with: function keys composed of a degree key 281, a minute key 282 and a second key 283 for inputting the longitude and latitude values indicated in the map; and a longitude/latitude indicating portions 284 for indicating the inputted two points of the diagonal coordinates in the diagonal positions of a rectangular picture 285. The remaining construction is similar to that shown in FIG. 21. The inputting operations through this screen are carried out by inputting the longitude/latitude values while observing the atlas, and the setting is ended by pushing the end key after the inputted coordinates displayed in the screen have been confirmed.

Here will be described the process of setting the position coordinate data with reference to FIG. 23. When the input data as the point coordinate information is acquired by operations through the screen or voice or by radio-wave or optical communications, the position coordinate values are converted at a predetermined unit, e.g., at the unit of 1/128 sec.. The input data thus converted is stored as the position coordinate data. And, the point is indicated on the map by processing the position display of the destination.

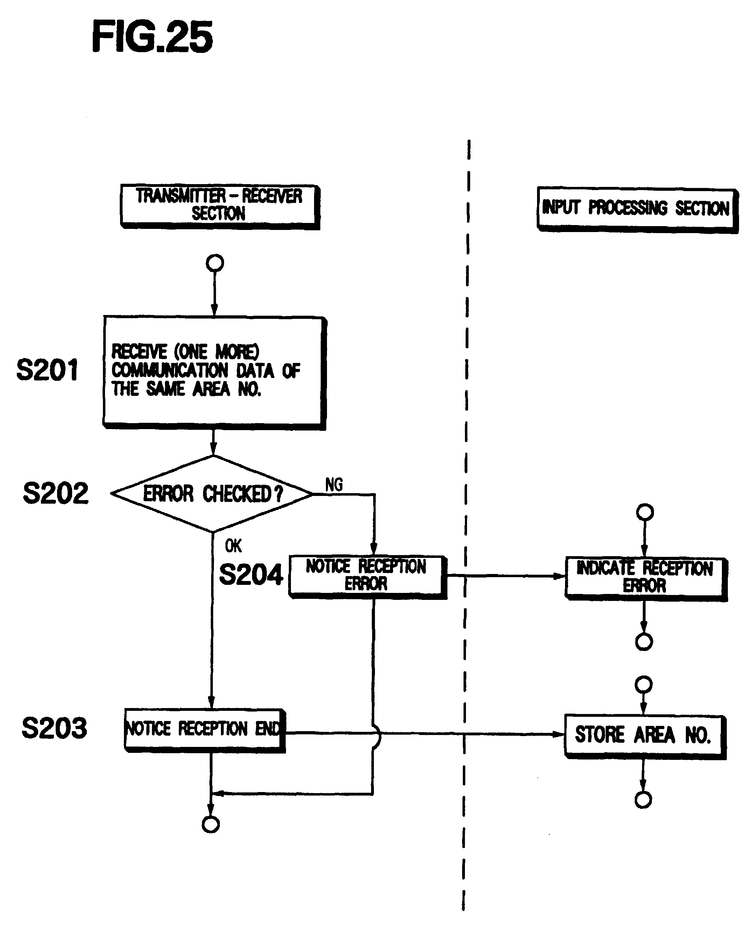

Here will be described the input processing by the communication data. FIG. 25 shows a flow of processing the transmission/reception of the navigation system and a flow of processing the received data. When the transmitter-receiver receives one or more communication data of the same area number (at S201), an error check is executed (at S202) on whether or not the communication data is correct. If the communication data is normal, the input processing section is informed of the reception end (at S203), and the area number is stored on the basis of the communication data. From this inputted area number, there is indicated the block representing point containing the destination and/or the block area. If the communication data is not normal, on the contrary, the input processing section is informed of the reception error (at S204), and a message of the reception error is indicated.

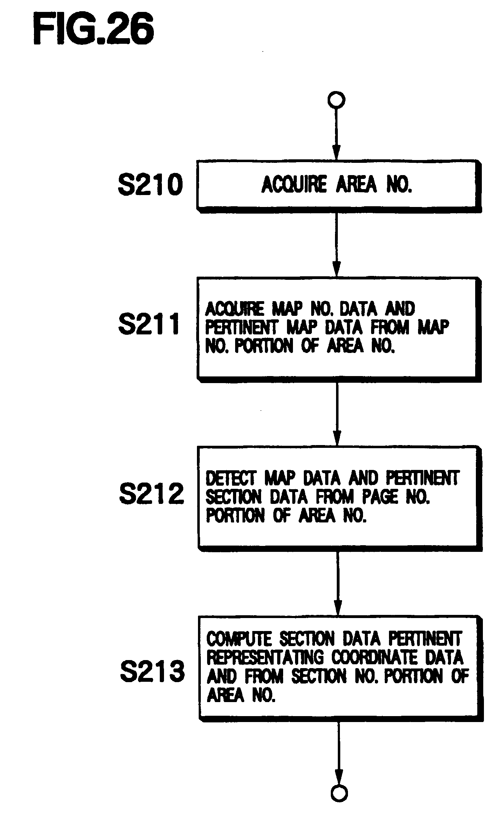

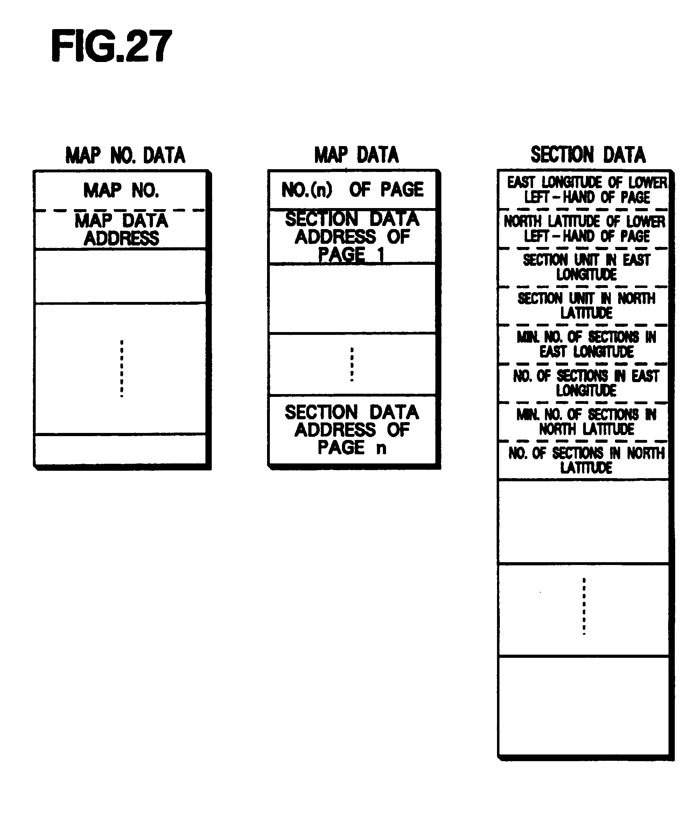

Here will be described a specific example for converting the coordinates from the area number. FIG. 26 is a processing flow in case the data is divided into arbitrary lattice areas. FIG. 27 shows the data structure.

First of all, the data structure of the area number will be described in the following. As shown in FIG. 27, the map number data is constructed of the map number and the address stored with the data of that map. The page data is constructed of the page number of the atlas specified by the map number and the address stored with the section data of each page. The section data is constructed of data such as the section units of the lower righthand of the page of the section specified in the atlas, as taken in the longitude and latitude, the minimum (i.e., Min.) section number, and the number of sections.

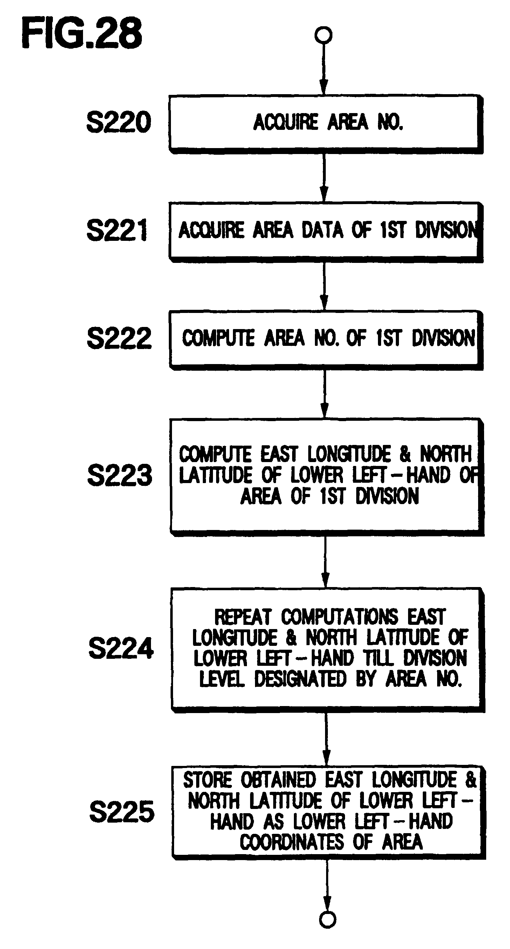

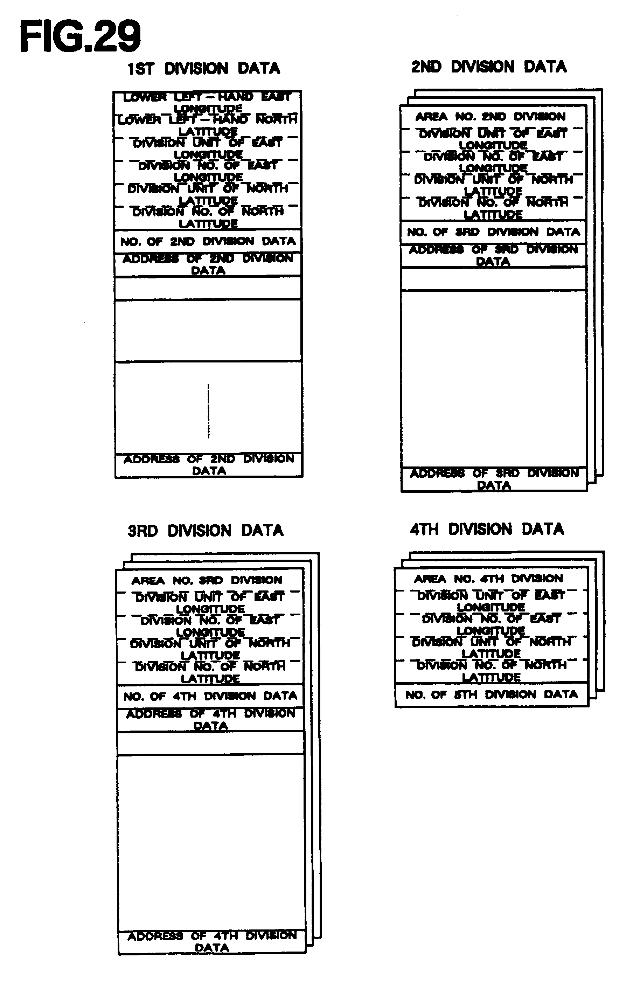

The coordinate transformation is executed from the area number on the basis of such data structure. Specifically in FIG. 26, when the area number inputted by the input means through the screen or communications is acquired (at S210), the map number data and a pertinent map data are acquired (at S211) from the map number portion of the area number. Next, the map data and a pertinent section data are detected (at S212) from the page number portion of the area number. Moreover, the section data a pertinent representing coordinate data is calculated (at S213) from the section number portion of and the area number. FIG. 28 shows a processing flow in case the national map is uniquely divided into lattice areas. FIG. 29 shows a data structure. This embodiment will be described in connection with the divisions according to the four-time dividing method shown in FIG. 22.

First of all, the data structure of the area number will be described in the following. In FIG. 29, the first division data is constructed of the lower lefthand longitude and latitude as the reference point of the map, the division units and division numbers in the east longitude and the north latitude, the data number as the data relating to the second division, and the address stored with the data. The second division data is provided for each of the areas divided by the first division and has its data structure constructed of the number of the second division area, the division units and division numbers in the east longitude and the north latitude, the data number as the data relating to the third division, and the address stored with the data. The data of the third and later divisions are likewise constructed.

The coordinate transformation is executed from the area number on the basis of such data structure. Specifically in FIG. 28, when the area number inputted by the input means is acquired (at S220), the area data of the first division is acquired (at S221), and the area number of the first division is computed (at S222). The east longitude and north latitude of the lower lefthand of the area of the first division are computed (at S223). The east longitude and north latitude of the lower lefthand of the divided area are computed (at S224) from the number of the area of the second division. These computations of the east longitude and north latitude of the lower lefthand are repeated (at S224) till the division level designated by the area number. The east longitude and north latitude of the lower lefthand thus obtained are stored as the coordinates of the lower lefthand of the area (at S225).

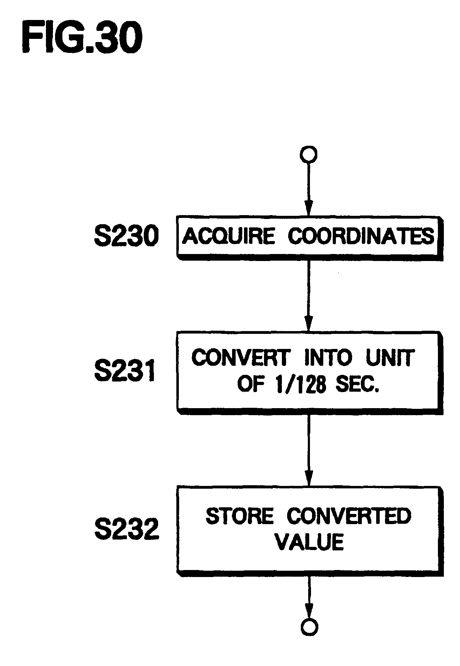

Here will be described the processing of the case in which the area number is the coordinates. FIG. 30 shows the processing flow of the case in which the area number is the coordinates. When the inputted coordinates are acquired (at S230), the input coordinates are converted into the unit of 1/128 seconds (at S231), for example, so that their units may be arranged, and these converted value is stored (at S232). The above embodiment has been described in case the destination is to be set by inputting the area number, but can also be applied to the setting of the point of the present position or the transit point. The system construction thus made can be applied to the setting of the present position or the transit point.

As described above, the foregoing embodiment can solve the problems of the prior art in the inputting of the destination, as disclosed in Japanese Patent Laid-Open No. 187898/1990 or 173820/1989, for example. Specifically in Japanese Patent Laid-Open No. 187898/1990, the destination is inputted through a telephone number. In case the house of an acquaintance is to be set as the destination, its telephone number may frequently fail to be registered, although no trouble would occur if registered. Thus, the map is displayed by using the area (or toll number) covering the house as the representing point. Since the displayed map naturally covers a wide range, it is difficult to specify the acquaintance's house from the map. If this difficulty is to be eliminated, it is sufficient to register the telephone number of the acquaintance's house, but this registration will increase the quantity of data and accordingly the cost drastically.

On the other hand, Japanese Patent Laid-Open No. 173820/1989 discloses an inputting method by genres or code numbers. In order that unspecified multiple destinations such as the houses of acquaintances may be set, for example, they have to be encoded one by one. When the data code is inputted, there is required the data for converting the code number into the position information. Thus, the user has to be burdened with both the cost for the data and the cost for a system to store the data. In order to display the map demanded, moreover, the driver is troubled by many (designating) operations for setting the present position or the transit point.

The foregoing embodiment has succeeded in solving the problems of the prior art described above. Specifically, the necessary map information can be easily read and displayed by inputting the area number through the input means, by reading the position coordinates corresponding to the inputted area number or the coordinates of the area representing point from the memory means, by retrieving through the retrieval means the map data corresponding to the read position coordinates, by reading the retrieved map data from the memory means, and by displaying the read map data in the display means. Thus, the necessary map information can be easily read and displayed by inputting the area number of the atlas or the coordinates of the area representing point so that the position inputting operation such as the destination setting operation can be simplified.

Since, moreover, the navigation system can eliminate the destination data which is usually stored in the system, it need not require the storage space for the data and the memory space for latching the data temporarily in the arithmetic unit, so that it can be made compact. Still moreover, the navigation system can be provided at a reasonable price because it utilizes the existing map information.

In case the information center is employed, the user can be freed from the trouble of examining the map by himself and from the irritations at the examining time. Thanks to the interface corresponding to the area number or the coordinates of the area representing point, moreover, many kinds of systems can be made common to lower the product costs. In the inputting case through the communications, still moreover, the inputting operation itself can be eliminated to simplify the setting operation.

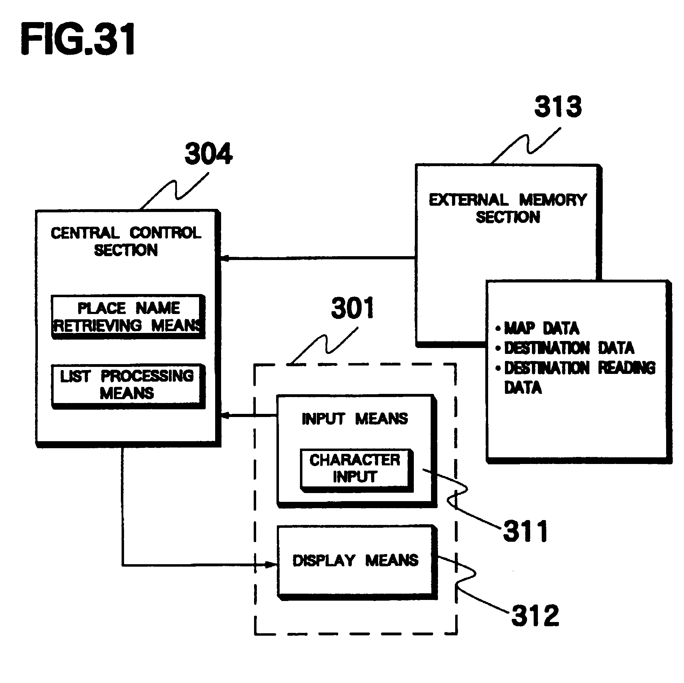

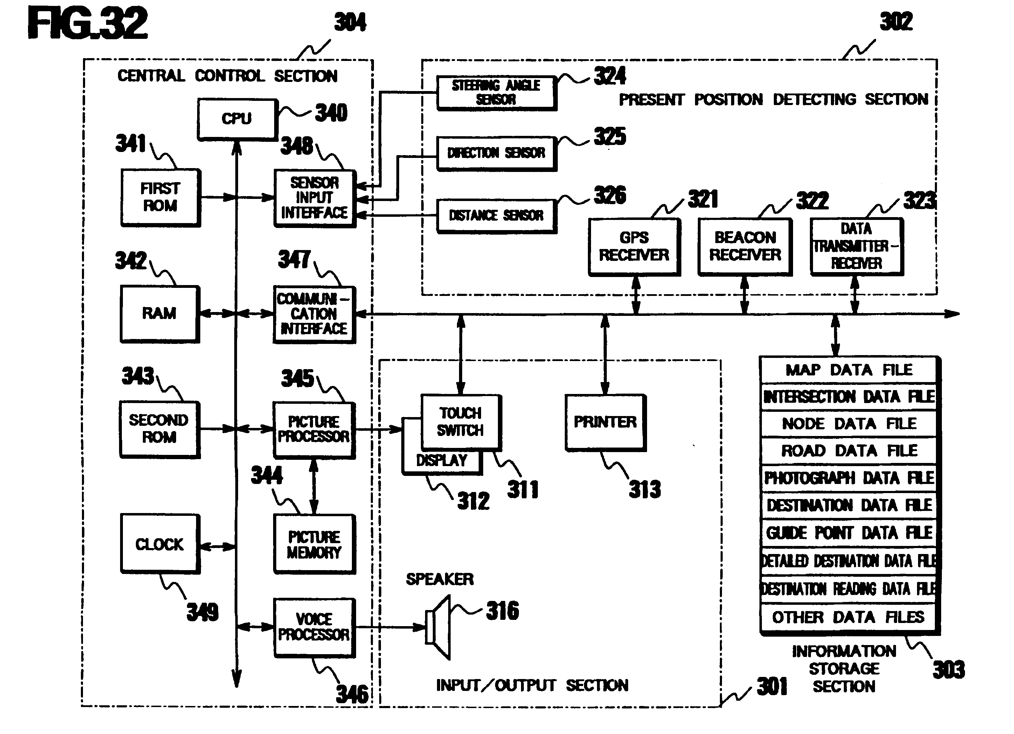

With reference to the drawings, here will be described a navigation system which has a place name retrieving function to retrieve a registered place name by a similar name or an abbreviated name. FIG. 31 shows a hardware construction for realizing the registered place name retrieving function of the navigation system of the present invention. FIG. 32 shows the system construction of the navigation system having the function to retrieve the registered place name from an arbitrary character string inputted.

The navigation system is constructed to include: an input/output section for inputting/outputting the information on the route guidance; a present position detecting section 302 for detecting the information on the present position of the vehicle of the user; an external information storage section 303 stored with the navigation data necessary for computing the route and the display guide data necessary for the induced guidance; and a central control section 304 for executing a route retrieval processing or an indication guide processing necessary for a route guidance and for controlling the system in its entirety.

The input/output section 301 has functions to instruct the central control section 304 the navigation processing according to the will of the user so as to input a destination and instruct and/or display the guide information with a voice or in a screen, when the driver demands it, and to output the processed data or the communication data to a printer, to a speaker for a voice or to the display. As the input means for realizing these functions, the input section is composed of a touch panel 311, in which a touch switch for inputting a destination by its address, telephone number and coordinates is packaged in a display 312. Or the other hand, the output means is composed of: a display 312 for displaying the input data on the screen and the route guidance on the screen either in response to the request of the driver or in an automatic manner; a printer 313 for printing the data processed by the central control section 304 and the data stored in the external information storage section 303; and a speaker 314 for outputting the route guidance in a voice.

Here can be added the voice recognition means for the voice input and the card reading means for reading the data recorded in the IC card or the magnetic card. There can also added the data communication means for transferring the data with the information source such as the information sensor for storing the data necessary for the navigation and for providing the data through the communication lines upon the request of the user or the electronic note stored in advance with the data intrinsic to the user such as the map data or the destination data.

The display 312 constructs the display means of a color CRT or a color liquid crystal indicator for displaying in colors all the screens necessary for the navigation such as the destination setting screen, the route guidance screen, the section map screen or the intersection map screen on the basis of the map data and the guide data processed by the central control section 304 and the button switches for setting the route guidance, guiding that the route is being induced and for switching the screens. The route guide screen is composed of at least of screens of the whole route map, the route information and the peripheral map. Moreover, the display 312 is formed with the touch panel 311 corresponding to the indications of the function buttons so that the aforementioned operations may be executed on the basis of the signals inputted by touching the buttons.

The present position detecting section 302 is composed of: a GPS receiver 321 making use of the global positioning system (GPS); a beacon receiver 322; a data transmitter-receiver 323 making use of a cellular phone or an FM multiplex signal; a steering angle sensor 324 made of a wheel sensor or a steering sensor, for example; a direction sensor 325 made of a terrestrial magnetism sensor, for example; and a distance sensor 26 for detecting the distance covered from the number of revolutions of the wheels.

The external information storage section 303 is a data base which is stored with all the data necessary for the route guidance such as the map data, the intersection data, the node data, the road data, the photographic data, the destination data, the guide point data, the detailed destination data, the road name data, the branch data, the display guide data and the voice guide data. The information storage section 303 is stored with a destination data file related to the map data file and a destination reading data file especially as the place name retrieving/setting information necessary for practicing the present invention.

The central control section 304 is composed of: a CPU 340 for executing the processing operations; a first ROM 341 stored with a program for processing the route retrieval, a program for executing a display control necessary for the route guidance and a voice outputting control necessary for a voice guidance, and data necessary for the programs; a RAM 342 to be temporarily stored with the route guiding information retrieved and the data being processed; a second ROM 343 stored with the display information data necessary for the route guidance and the map display; a picture memory 344 stored with the picture data to be used for displaying the screen; a picture processor 345 for fetching the picture data from the picture memory on the basis of the display control signal coming from the CPU, to process and output the picture data to the display; a voice processor 346 for synthesizing the voice, phrase, sentence and sound read out of the external information storage section 303 on the basis of the voice output control signal coming from the CPU, to convert them into analog signals and output the signals to the speaker; a communication interface 347 for transferring the input/output data through communications; an input interface 348 for fetching the sensor signal of the present position detecting section 2; and a clock 349 for introducing the date or time into the internal diagnostic information.

The present system is so constructed that the driver can select the screen display or the voice output for the route guidance.

On the other hand, the present system determines the present position by computing a presumed position on the basis of the various sensor signals and GPS data coming from the present position detecting section and by deciding the position on the road of the map from the correlation between the presumed position, and the road and the GPS data.

Moreover, the present system has a function to judge whether or not the present place is approaching a predetermined guide point in relation to the position of the vehicle on the lane with reference to the course to the destination. By this function, specifically, the timing for automatic outputting of a voice of a predetermined distance to an intersection on the guide route or a decision of transit of the intersection or for outputting the indication of intersection information such as the name of the intersection passed is judged. On the basis of this judge result, the present system instructs the picture processor and the voice processor of the guidance. In response to a request signal, moreover, the present system instructs the voice processor of the voice guidance of the present place.

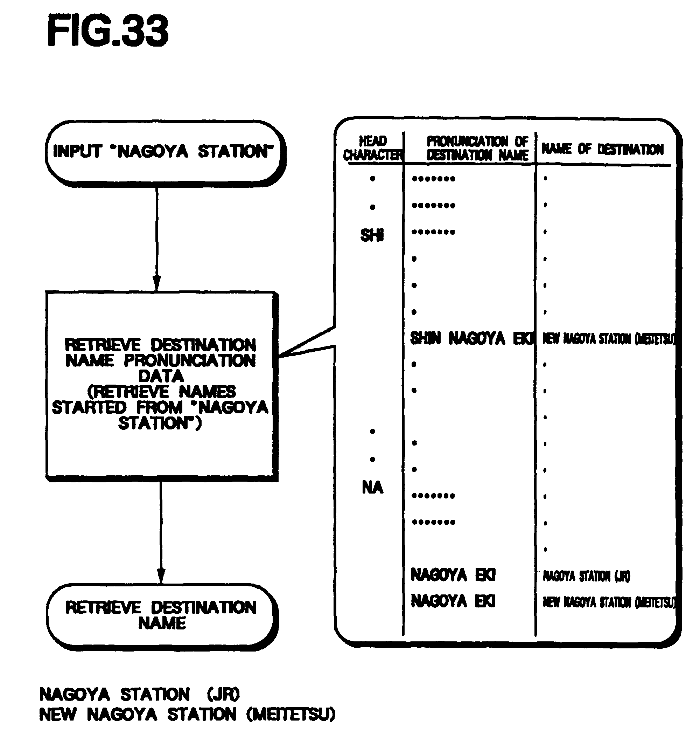

Here will be described the retrieval of the registered place name. FIG. 33 shows the routine for retrieving the registered place names in which the navigation system according to the embodiment of the present invention is applied to data having a plurality of pronunciations.

The data structure is made such that the destination names can be listed up at the portion having a common pronunciation. In the case of the "NEW NAGOYA STATION (MEITETSU)" and the "NAGOYA STATION (JR)", for example, the pronunciation of "NAGOYA EKI" is common. The "NEW NAGOYA STATION" is incorporated, as the "SHIN NAGOYA EKI" having its pronunciation started with the "S" series, into the data base, and the "NEW NAGOYA STATION" and the "NAGOYA STATION" are incorporated, as the "NAGOYA EKI" having its pronunciation started with the "N" series, into the data base. Since the destination names are thus incorporated into the data base, a plurality of destination names can be retrieved by inputting the "NAGOYA EKI" as the key word.

In case the aforementioned destination names are to be retrieved, the registered name retrieval is selected from the menu screen. Then, the later-described registered name retrieving screen is opened. When the registered name is inputted from the retrieval screen to start the retrieval, the destination name pronunciation data is retrieved to detect the destination name. If the "NAGOYA EKI" is inputted, for example, the names having their pronunciations started with the "NAGOYA EKI" are retrieved in the destination name pronunciation data retrieval. In case there are registered, as the destination names for the destination name pronunciation data, the "NEW NAGOYA STATION (MEITETSU)" for the "SHIN NAGOYA EKI" and the "NAGOYA STATION (JR)" for the "NAGOYA EKI", these two destination names are detected. The destination can be designated from these retrieval results.

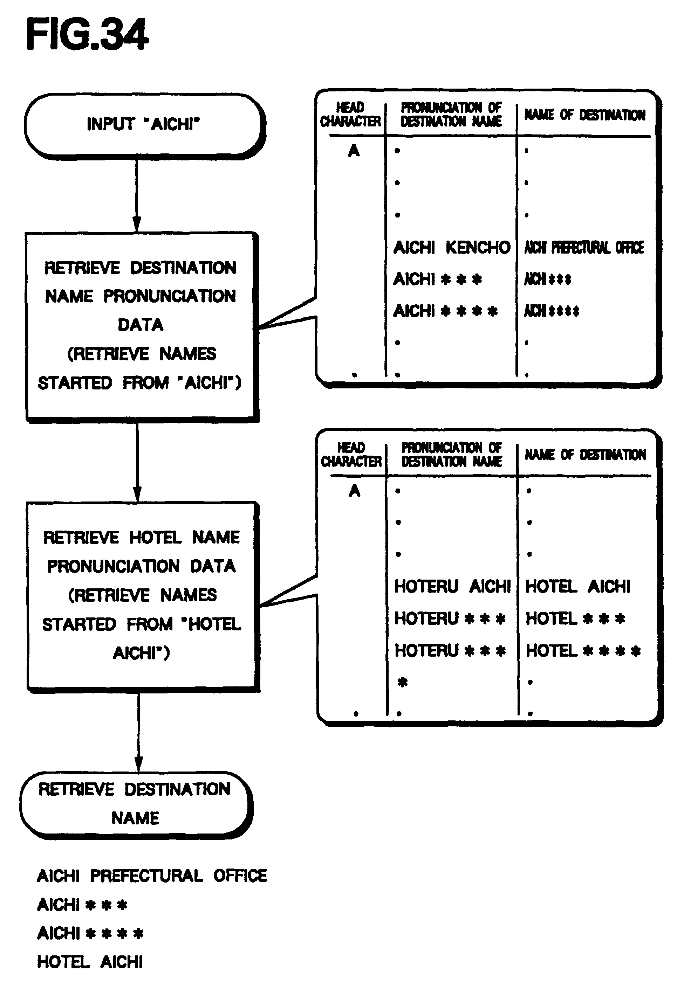

FIG. 34 shows a routine for retrievals by adding a certain character string by genres. The data structure is made such that the destination names can be listed up at their portions having a common pronunciation by genres. For example, the destination names having their pronunciations started with the "AICHI" such as "AICHI PREFECTURAL OFFICE", "AICHI ∗∗∗" and "AICHI ∗∗∗∗" are introduced into the data base, and the hotel names having their pronunciations started with the "HOTERU" such as "HOTEL AICHI", "HOTEL ∗∗" AND "HOTEL ∗∗∗" are introduced into the data base.

Since the destination names are thus introduced into the data base, all of them that satisfy the conditions can be retrieved by inputting the pronunciation of a portion of the destination after having designated the genre.

In case a hotel having the pronunciation "AICHI" in the portion of its name is to be retrieved, the "AICHI" is input. Then, the names having the pronunciation started with the "AICHI" are retrieved in the destination name pronunciation data retrieval, and the names having the pronunciation started with the "HOTERU" are retrieved in the hotel name pronunciation data retrieval. As a result, the "AICHI PREFECTURAL OFFICE", the "AICHI **∗∗",** the "AICHI ∗∗∗" and the "HOTEL AICHI" are detected. Of these, the "HOTEL AICHI" can be designated as the destination.

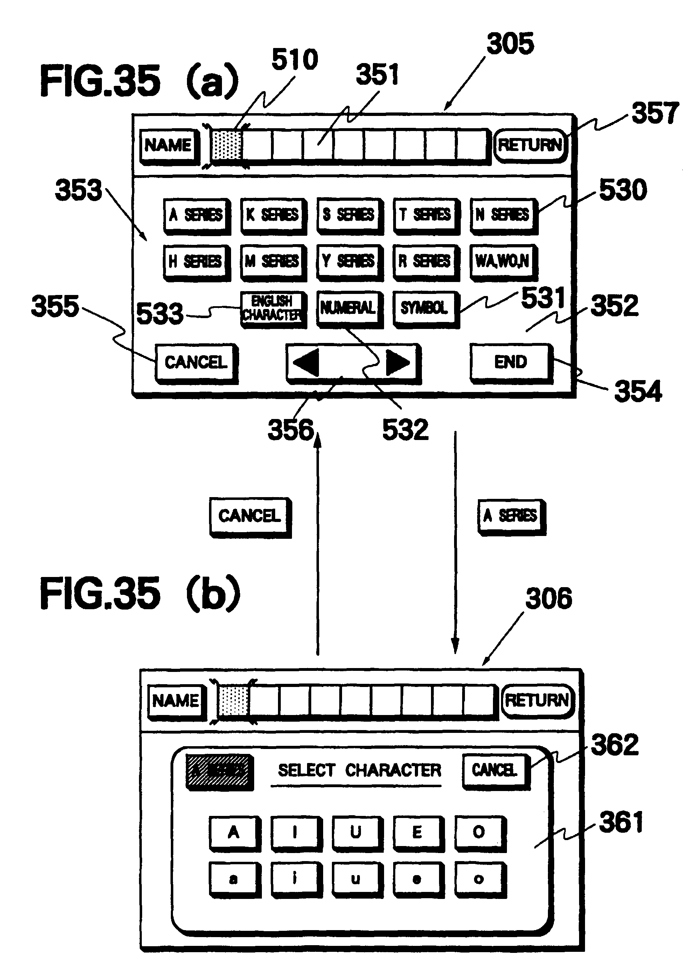

FIG. 35 shows one example of the layout of the screen for inputting the registered place names. The screen, as shown in FIG. 35(a), is formed with a name indicating portion 351 for indicating the registered place name inputted, and a character kind designating portion 352.

This character kind designating portion 352 can have its screen switched to an individual character inputting screen 306 which is to be opened according to the kind of the character designated. The character kind designating portion 352 on the inputting screen is formed with: character kind designating buttons 353 for inputting the registered place such as series designating buttons 530 for opening the character inputting screen 306 by designating the character kind to input "kana" or Japanese alphabets, a symbol designating button 531 for inputting symbols, a numeral designating button 532 for inputting numerals, and an English character designating button 533 for inputting English characters; and function keys necessary for the character inputting operations to correct, delete and end the characters inputted. The aforementioned function keys are composed of: a delete button 355 for deleting the portion of the inputted letters, which is indicated by a cursor 510, one character by one character; a cursor moving key 356 for moving the cursor 510 of the name indicating portion 351 indicating the characters inputted; and an end button 354 for deciding the registered place name inputted.

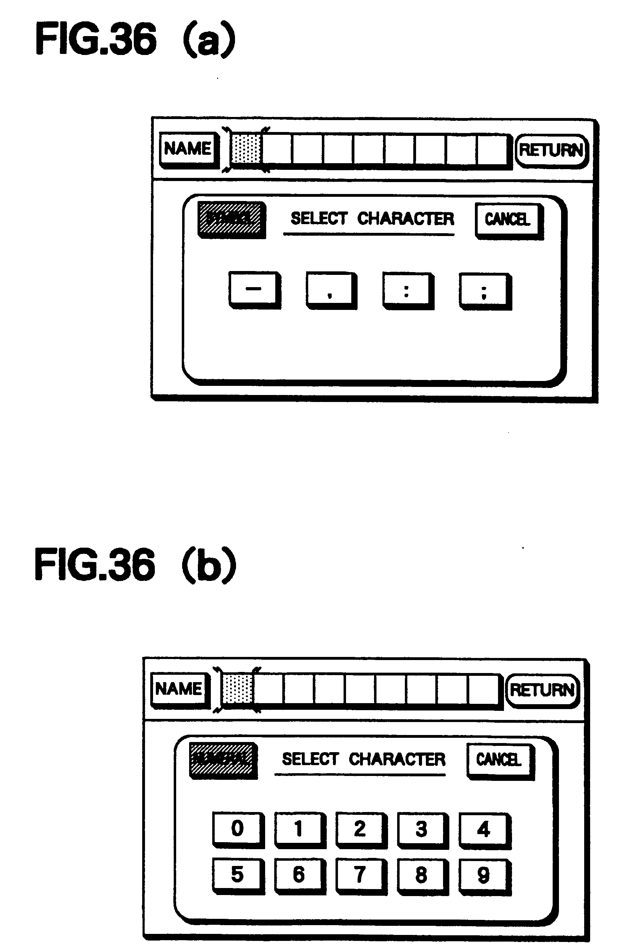

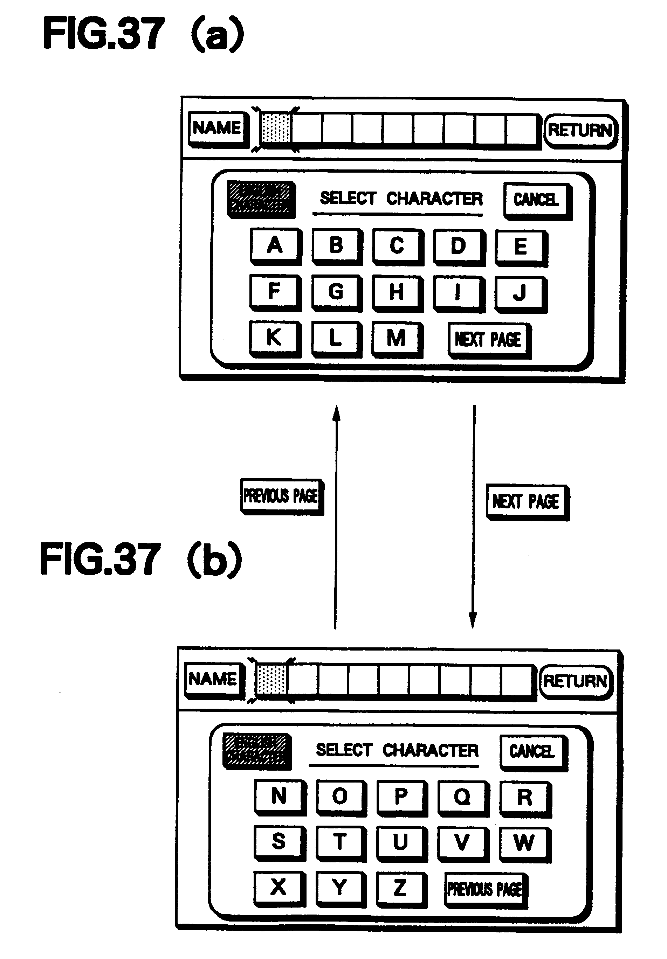

If the "A" series button is selected, for example, the "A" series character inputting screen 306 of FIG. 35(b) is opened. This "A" series character inputting screen is formed with character buttons 361 for inputting the larger characters and the smaller characters of the "A" series, and a cancel key 362 for closing the character inputting screen. These "kana" character inputting screens for other series are given similar constructions. On the other hand, FIG. 36 shows a character inputting screen which is to be opened when the symbol designating button 531 and the numeral designating button 532 are pushed. The operations of this screen are basically similar to that for inputting the "kana" characters. FIG. 37 shows an English character inputting screen to be opened when the English character designating button 533. The first screen, as shown in FIG. 37(a), is formed with character buttons of A to M and a next page key for opening a next page. The second screen, as shown in FIG. 37(b) to be opened by pushing the next page key, is formed with character buttons of N to Z and a previous page key for returning to the screen of the previous page. These first and second screens are individually formed with the cancel key for returning to the character kind designating screen of FIG. 35(a).

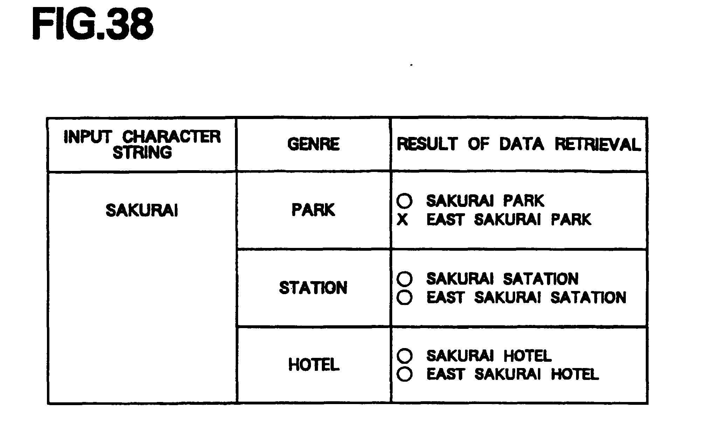

Here will be described a forward coincidence retrieval by the character string inputted. FIG. 38 shows an example for retrieving the character string "SAKURAI". In this example, the "SAKURAI" is retrieved nationally for all the genres, of which the genres of the "STATION" AND "HOTEL" are retrieved for the character strings inputted. In FIG. 38, symbol ○ indicates the character string can be detected, and symbol X indicates that the character string cannot be detected. If the character strings inputted are to be retrieved by the genres "STATION" and "HOTEL", for example, the name "EAST SAKURAI PART" is not retrieved.

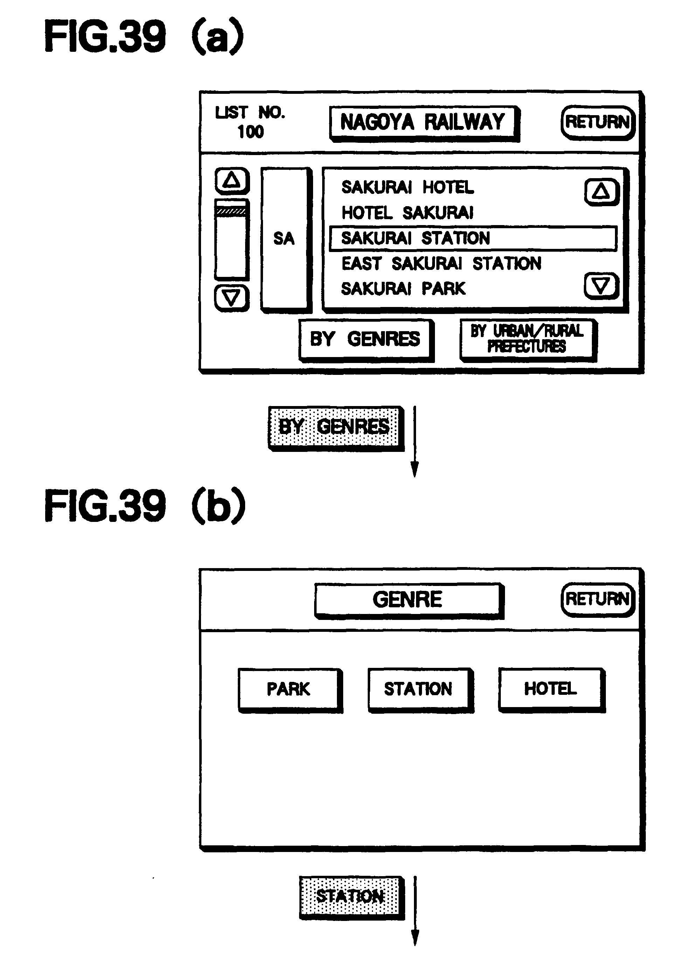

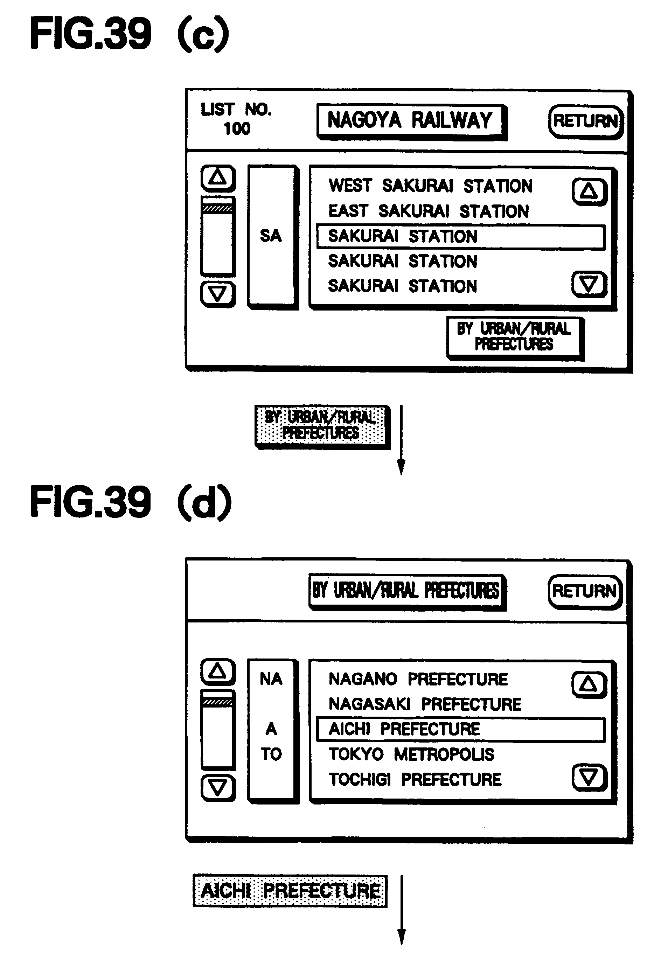

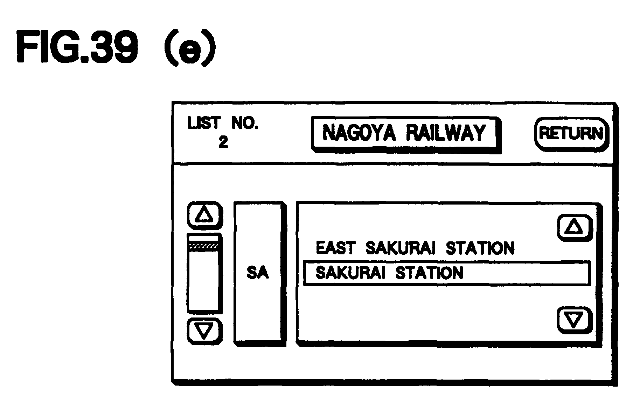

FIG. 39 shows one example of the layout of the registered place name indicating screen and the transient screen showing the retrieving procedure. If the "SAKURAI" is inputted from the registered place name inputting screen, the registered names having the registered name of "SAKURAI" are listed up by all genres and are indicated in the registered place list indicating screen of FIG. 39(c).

This registered place list indicating screen is formed with a first indication portion for indicating the number (i.e., the list number) of the registered places retrieved and the section, to which the registered place selected by the cursor belongs, and a second indication portion for indicating the list of the registered place names from the retrieval result. This second indication portion has its retrieved registered places scrolled by operating the scroll key, and one of the registered places indicated by the scrolling is selected by operating the cursor button to move the cursor. For example, the first indication portion has one hundred registered places having the pronunciation "SAKURAI", and it is indicated that the "SAKURAI STATION" selected in the second indication portion by the cursor belongs to the "NAGOYA RAILWAY".

This screen is formed with a "by genres" key for designating the genre to narrow the registered places, and a "by urban/rural prefectures" key for designating the registered places from the nation to the range of the urban/rural prefectures.

If the "by genres" key is pushed, the genre designating screen is opened to indicate the genre names provided in advance for the individual registered place names. If a genre is designated, the registered place narrowed by the genre can be extracted from the registered place names retrieved. The retrieval can also be made by narrowing by the urban/rural prefectures. Specifically, the by-genre list indicating screen is opened if a genre is designated. This by-genre list indicating screen is made to have a construction basically identical to that of the registered place list indicating screen and is formed with the "by urban/rural prefectures" key for narrowing the registered places by the urban/rural prefectures. If this key is pushed, there is opened the urban/rural prefecture designating screen for listing up the names of the urban/rural prefectures. If one name is selected on this screen from the urban/rural prefectures, there is opened an area list indicating screen in which only the registered places in the relevant prefecture are listed up.

In the present example, the registered places having the pronunciation "SAKURAI" can be retrieved on the genre designating screen such that they are narrowed to the three genres of "PARK", "STATION" and "HOTEL". If the station key is pushed, the registered places having the pronunciation "SAKURAI" as in the railway section are listed up in the by-genre list indicating screen. Since this list covers the nation, its number may be too large to retrieve the destination in the registered places. In case this difficulty arises, the retrieval is performed by narrowing the cover range by the urban/rural prefectures. If, in this case, the "AICHI PREFECTURE" is designated on the urban/rural prefecture designating screen, only the registered places having the pronunciation "SAKURAI" in the railway section of the Aichi Prefecture can be indicated in the by-area list indicating screen.

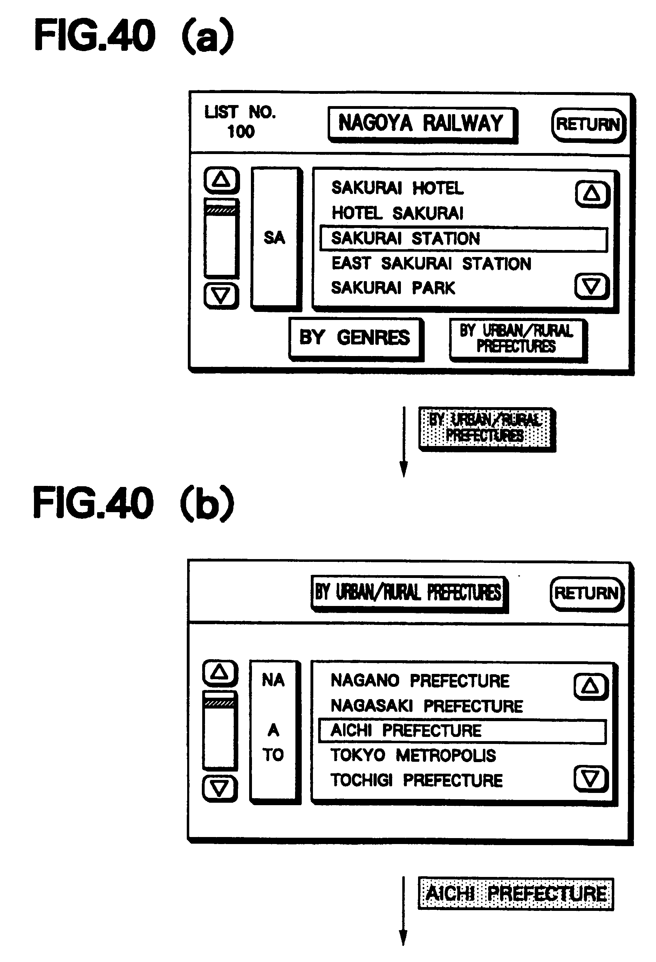

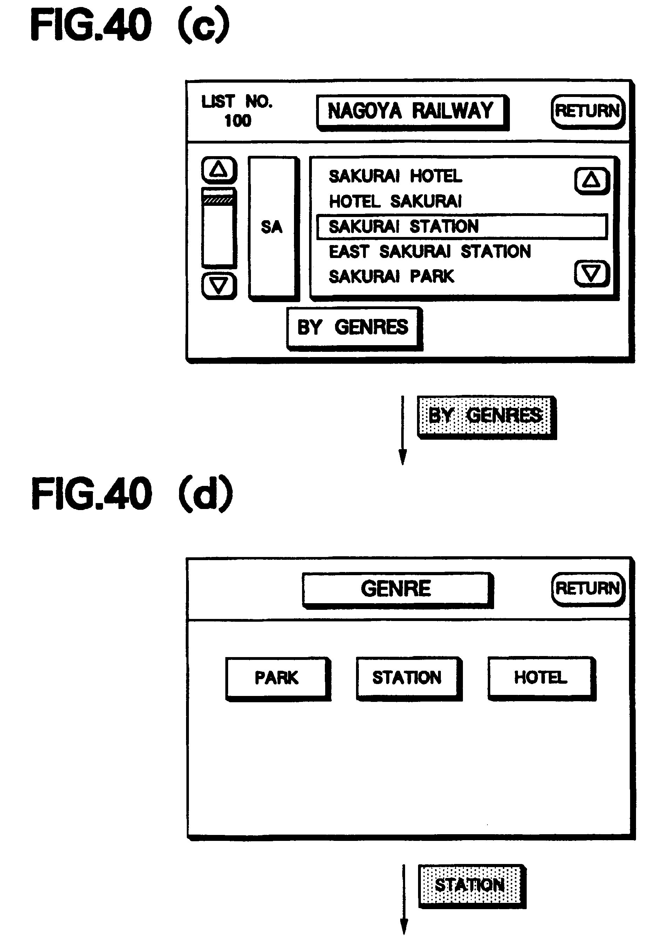

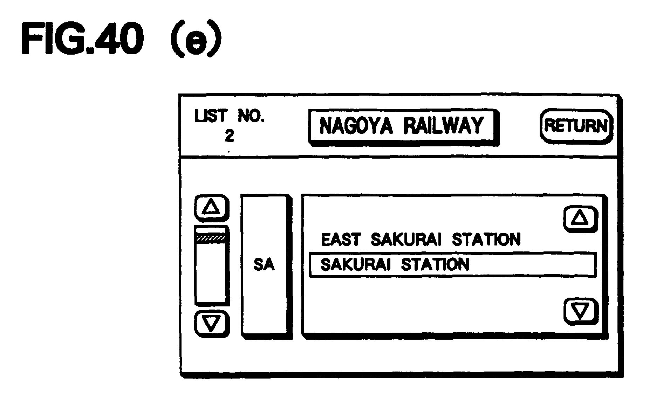

FIG. 40 shows the operations in case the urban/ rural prefecture key is pushed. Incidentally, the object to be retrieved is identical to that shown in FIG. 39, and the description of the operations will be omitted here. First of all, the name of prefecture of the object to be retrieved is selected on the urban/ rural prefecture designating screen. The registered place list indicating screen for each prefecture selected is opened, and the registered place of the object is searched in this screen. If the place is found, the cursor is moved to the registered place and is touched to set it. If, on the other hand, the number of the list is too large to find, the by-genre key is pushed to open the genre designating screen. If a genre is designated in this screen, the area list indicating screen is opened to list up the registered places belonging to the genre.

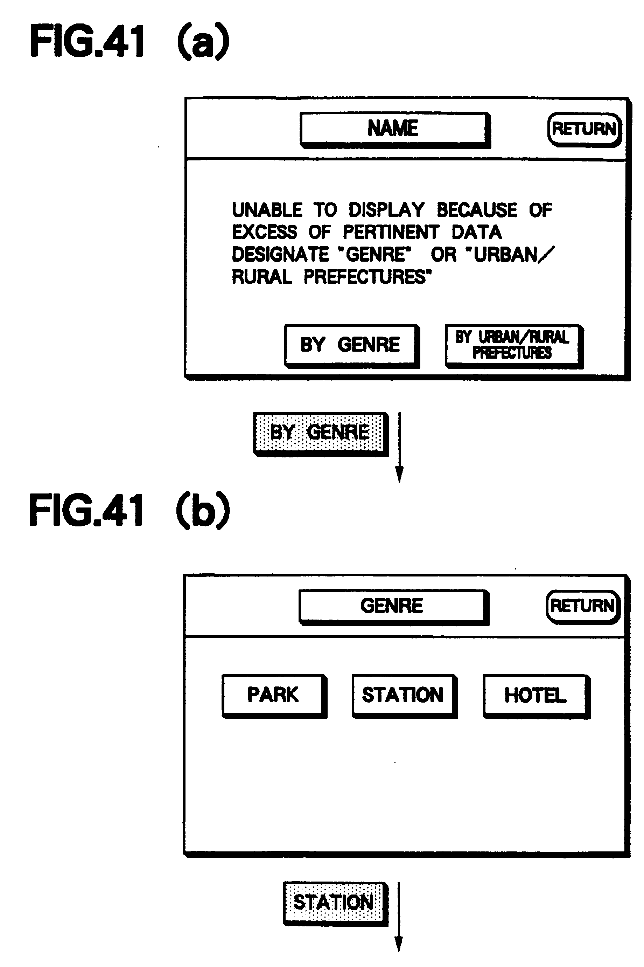

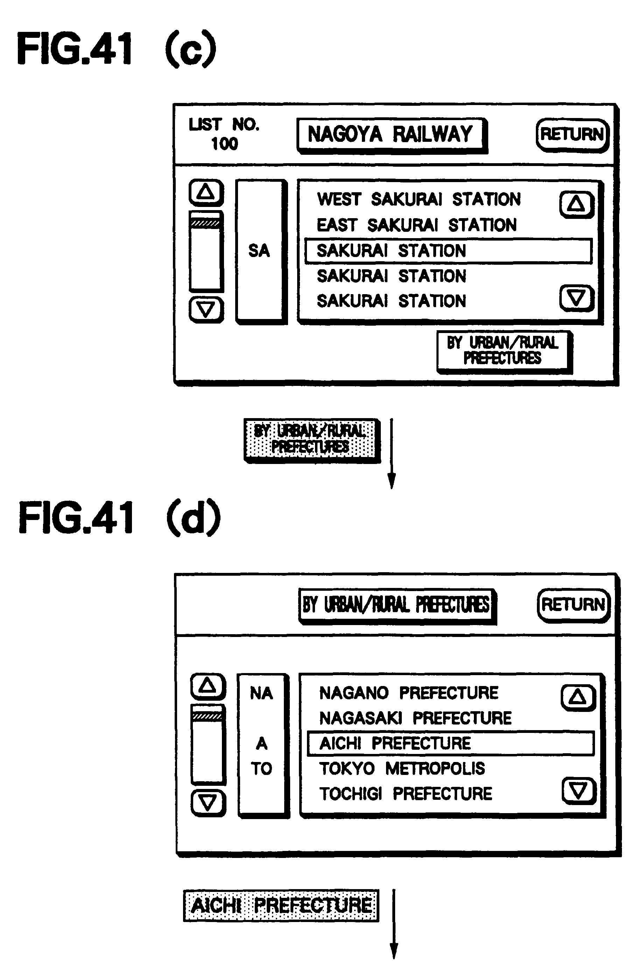

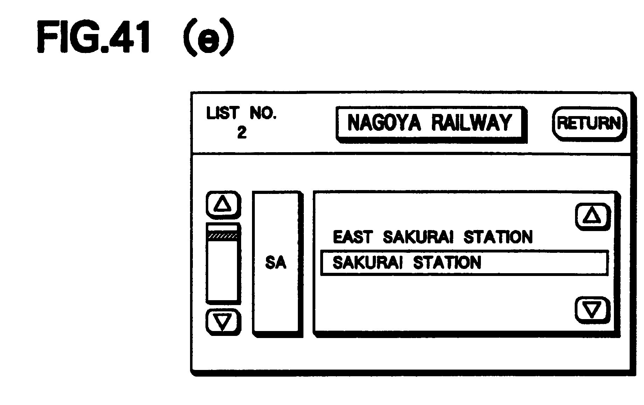

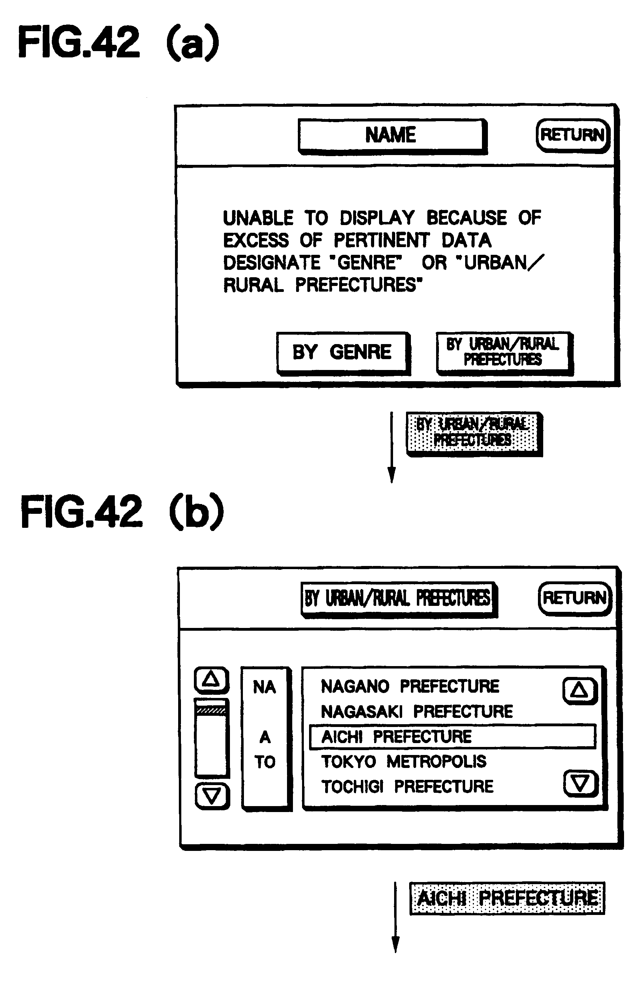

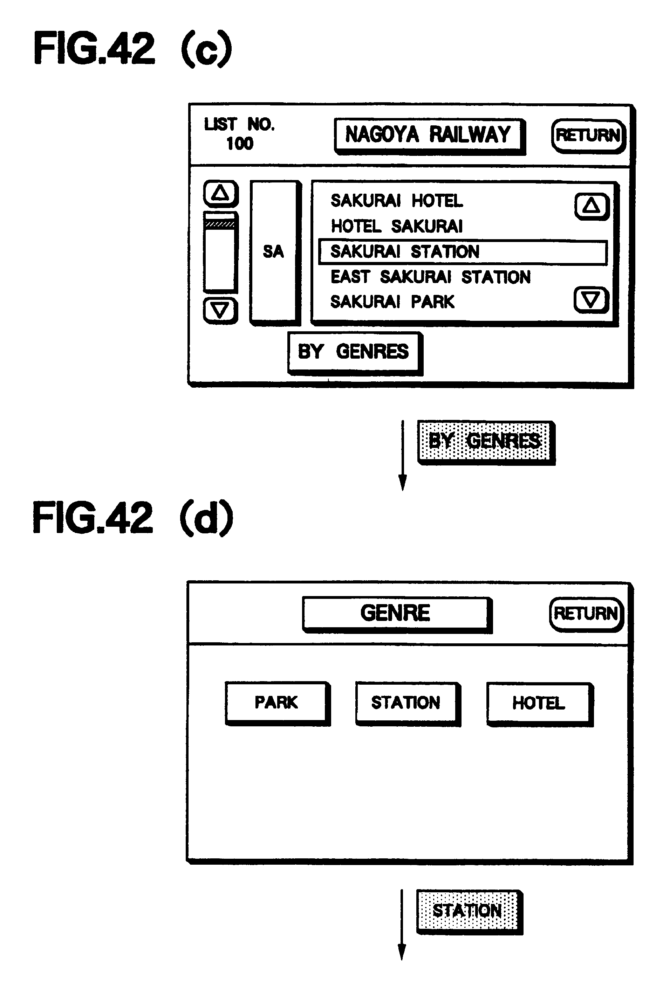

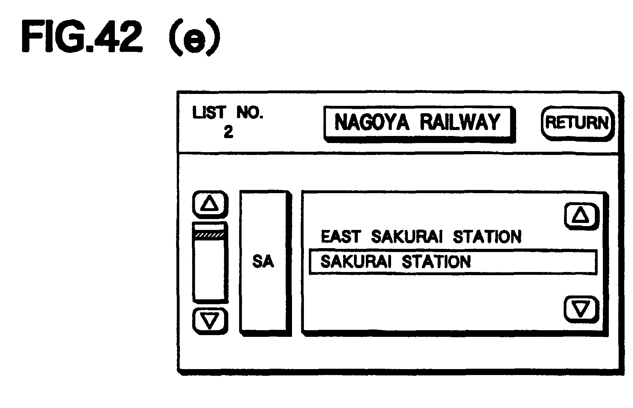

FIG. 41 shows an example of the indication of the registered place list indicating screen in case of a large list number. In this case, the message "Unable to indicate because of excess of pertinent data." "Designate the 'genre' or 'urban/rural prefecture'" is indicated. If the "genre" or "prefecture" is designated, the screen shown in FIG. 41 or FIG. 42 is opened so that the retrieval can be executed by narrowing the registered placed. Incidentally, the narrowing procedure of the registered places is similar to the aforementioned operations on the screens shown in FIG. 39 or FIG. 40, and its description will be omitted here.

In the present embodiment, the genre for retrieving the destinations containing the character string inputted is limited to the "station" or "hotel", the destinations may be retrieved for all the genres without any limitation.

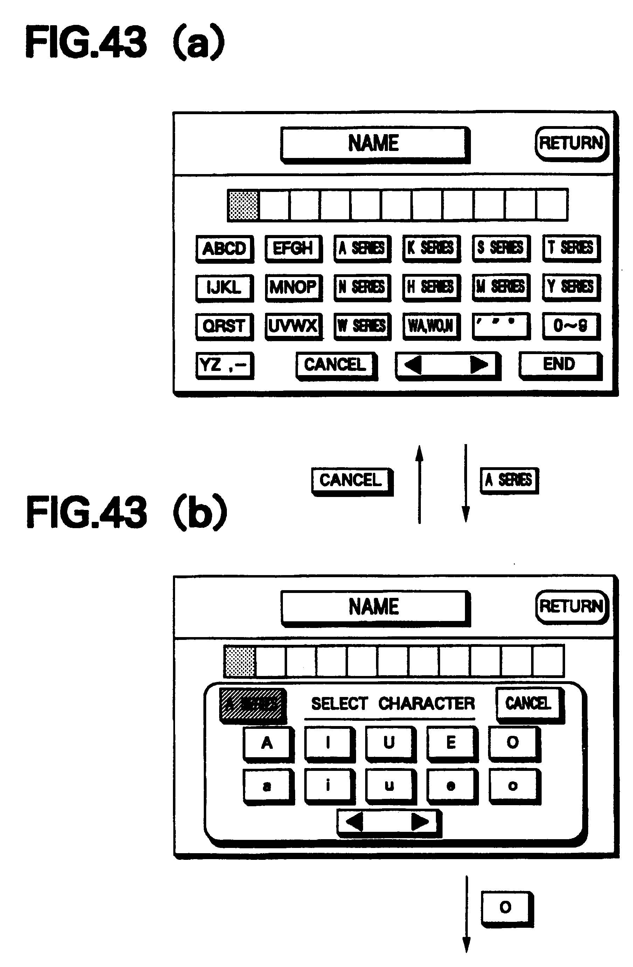

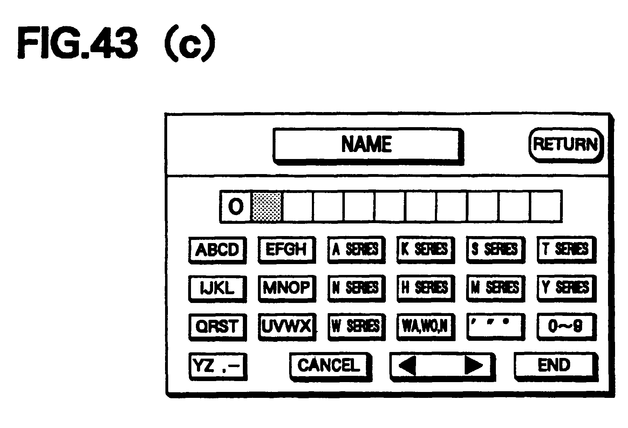

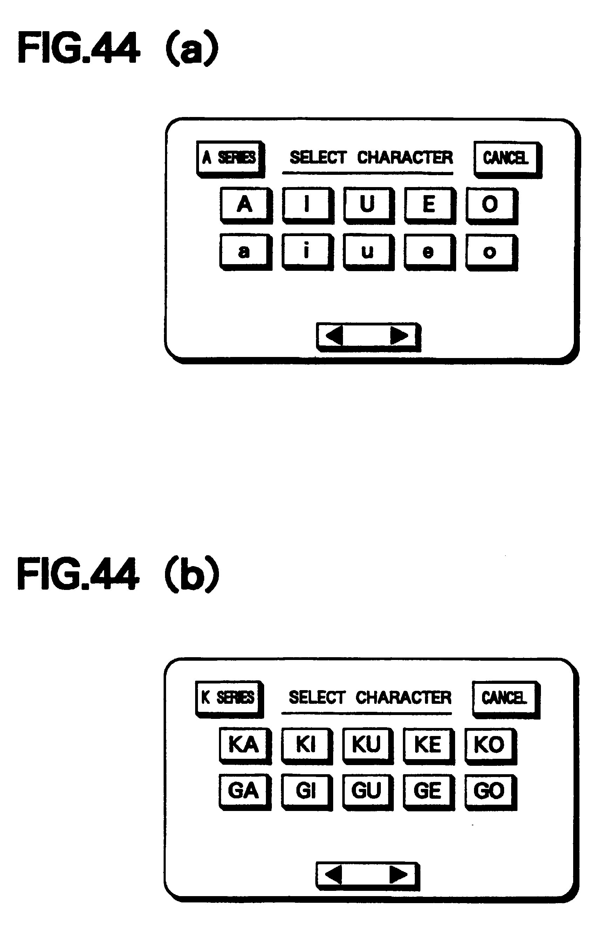

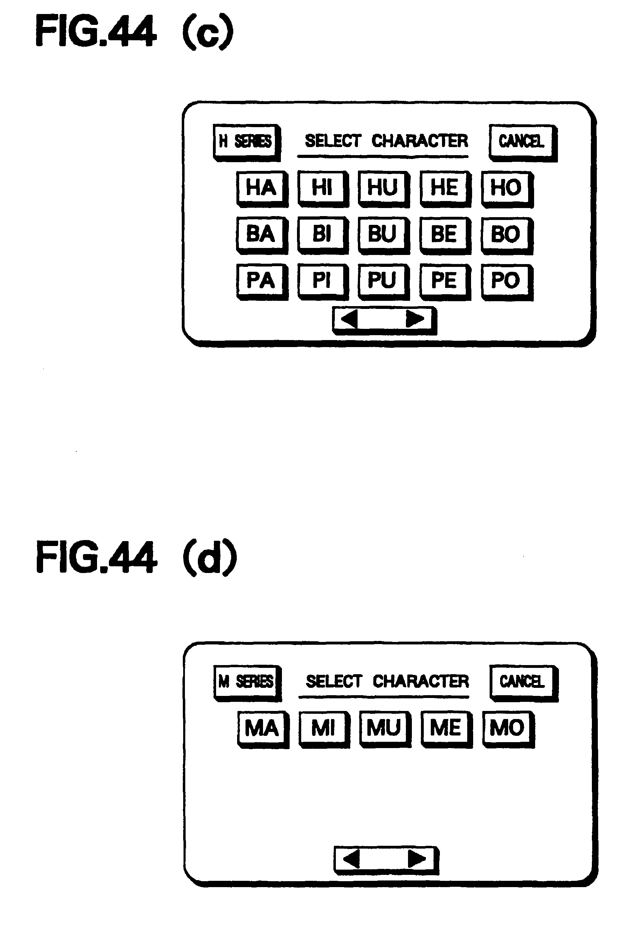

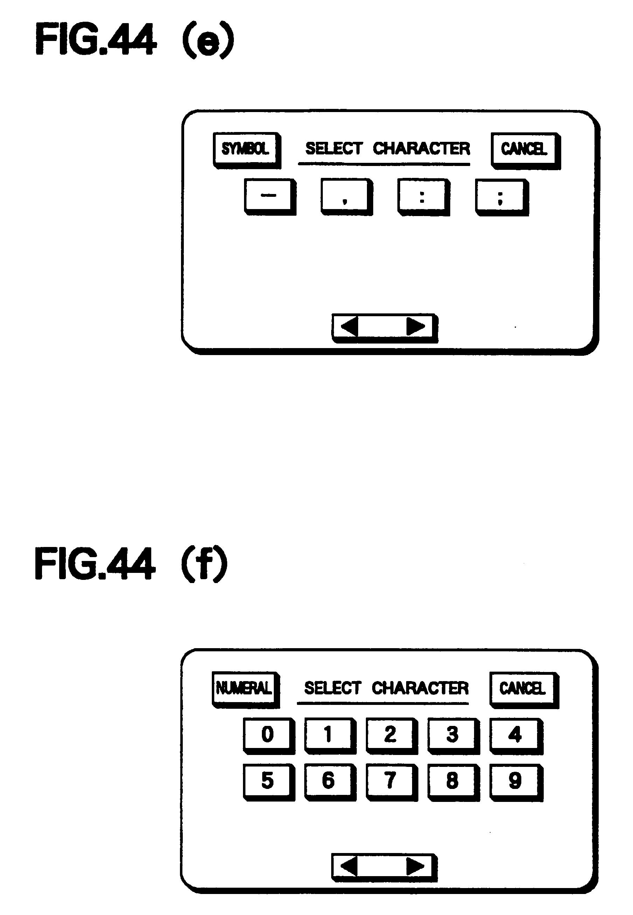

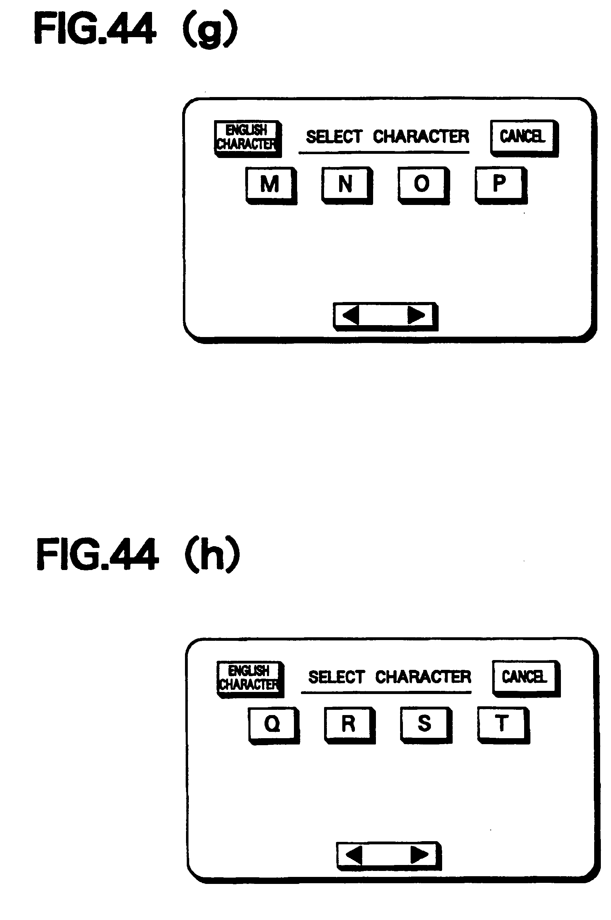

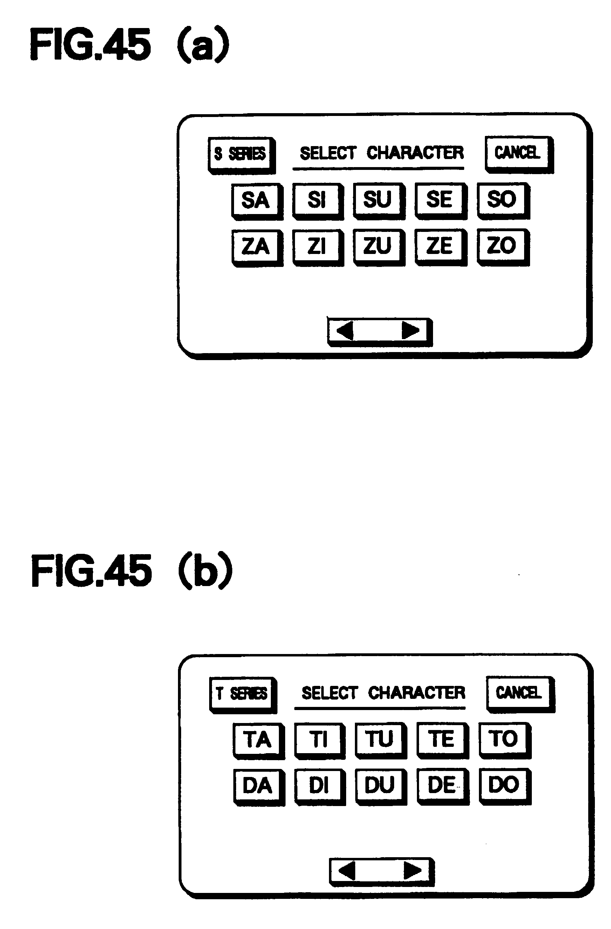

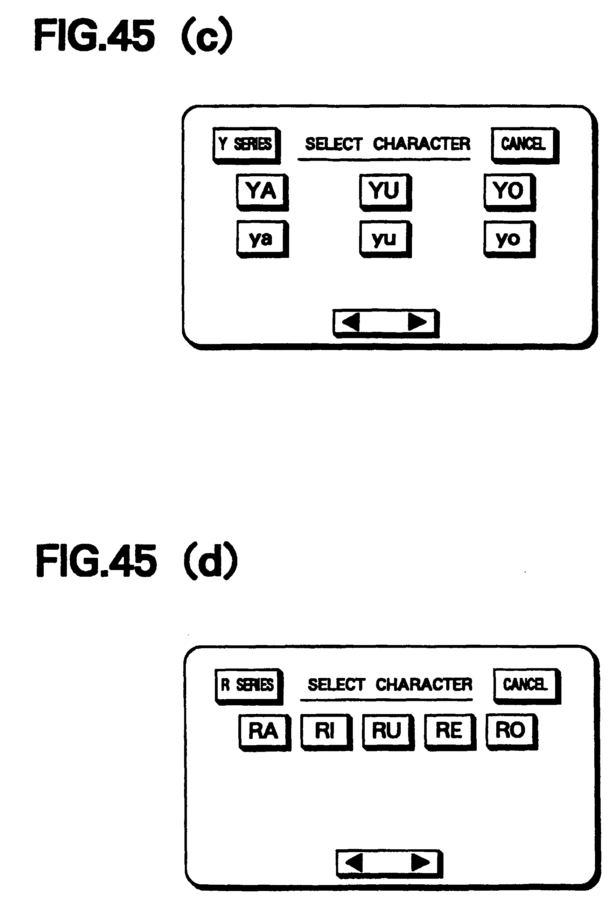

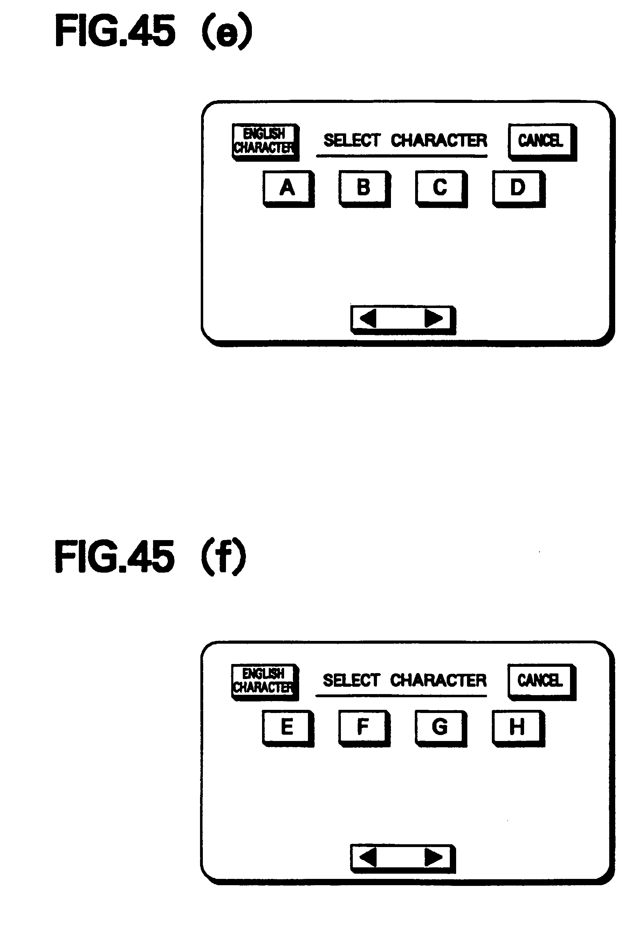

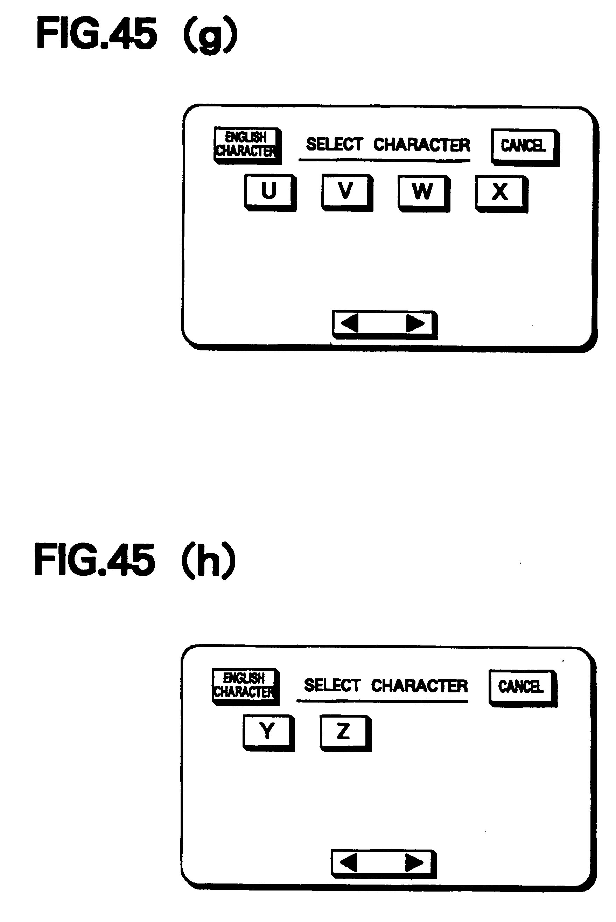

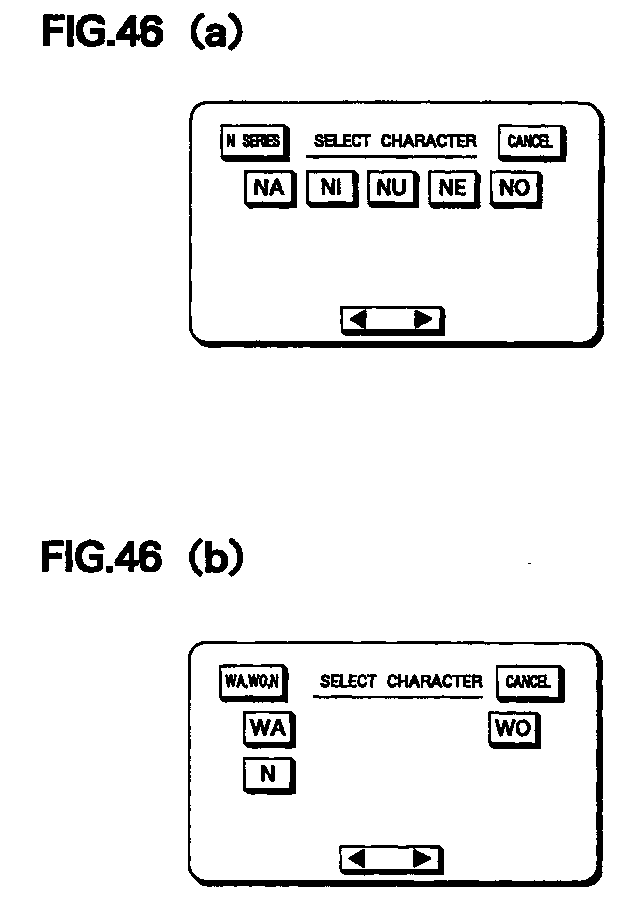

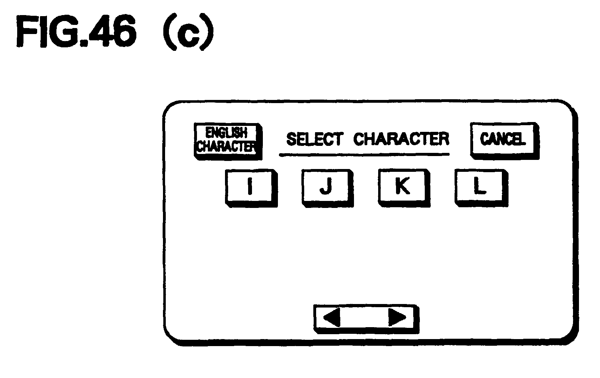

Here will be described another embodiment of the registered name inputting screen. FIG. 43 shows a registered place name inputting screen and a transient screen according to the operating procedure. In FIG. 43(a), the registered place name inputting screen is formed with: a registered place name indicating portion for indicating the registered place name inputted; character kind selecting keys for designating the character kinds such as the "kana" characters, the English characters and numerals; a clear key for clearing the inverted input characters by operating the cursor; and an end key for validating the input characters. There are also prepared the character inputting screen, as shown in FIG. 44 to FIG. 46. for inputting the individual character kinds corresponding to those character kind selecting keys.

If the "A" series key of the character kind selecting keys is pushed, for example, the "A" series character inputting screen, as shown in FIG. 43(b), is opened to input the large characters and the small characters of the "A" series by using this screen. The screen operations of the individual character kinds are basically similar to those of the screens shown in FIG. 34, and their description will be omitted here. In the present embodiment, the selected character inputting screen is automatically extinguished if no operation is carried out for a predetermined time period. If this time period elapses after the character "O" has been inputted, the screen returns to that of FIG. 43(c).

As has been described hereinbefore, the present embodiment can solve the problems on the place name retrieval in the prior art. In the place name retrieval of the prior art, for example, the genre such as the station, hotel or park is selected, the registered place names extracted by that genre are further retrieved by the urban/rural prefectures to select the registered place name. In case the registered place is to be selected by that procedure, the prior art has the problem that the registered place name may be unable to be selected if the prefecture to which the registered place belongs is unknown although its name per se is known. In case, on the other hand, the "NAGOYA STATION" and the "NEW NAGOYA STATION" are registered, only the "NAGOYA STATION" but not the "NEW NAGOYA STATION" is detected if the forward coincidence retrieval is executed with the pronunciation "NAGOYA EKI". In case the "HOTEL TOKYO" is registered, the name "HOTEL TOKYO" cannot be detected either even if the names "TOKYO HOTERU" and "TOKYO" are inputted. A golf course or a pleasure park cannot be detected unless their official names or registered names are inputted. These difficulties can be eliminated by the present invention. Specifically, if an arbitrary character string of the pronunciation of a registered place name, as demanded, is inputted by the character inputting means, the place name retrieving means reads the place name data and the place name pronunciation data out of the memory means so that the place name is outputted to the display means by retrieving the place names by the forward coincidence. As a result, the registered place name can be selected, if known, by inputting the characters and is directly retrieved so that it can be more easily detected by the less inputting steps than the prior art. In other words, the retrieval range is widened than the data having one pronunciation data for each registered place name so that the place names can be efficiently retrieved.

## Claims

1. A navigation system comprising:
a)information storage means (3) for storing map data; wherein
a₁) said map data is composed of topographic data, character data and housing data;
b) input means (11) for inputting a position; and
c)picture means (55); wherein
c₁) said picture means (55) are adapted for reading out said map data from said information storage means (3) and displaying a first map of a larger section area at and around said inputted position on the basis of said map data;
c₂) said picture means (55) is further adapted for reading out the housing data of said map data from said information storage means (3) and displaying a second map;
d) control means (50) for controlling a transition between said first map and said second map;
characterized by
e) means arranged to display selectively said first and second maps in response to a driver's input;
f) said housing data including block number data of smaller sections around said input position, said data being stored separate from the remaining data; and
g) means arranged to display said second map so that the read housing data are superimposed on the first map.

2. A navigation system according to Claim 1, wherein said block number data are composed of block numbers and names of smaller sections.

3. A navigation system according to Claim 1 or 2, wherein said block number data are determined on the basis of administrative divisions.

4. A navigation system according to Claim 2 or 3, wherein said information storage means (3) stores therein block pattern data along with the block numbers, and that said picture means (55) is responsive to receipt of an instruction signal from said input means (11) for reading from said information storage means the block number data of map data and the block pattern data, and for depicting or redrafting a second map with the block numbers and block patterns contained therein.

5. A navigation system according to any of Claims 1 to 4, wherein said first map and said second map are different in scale from each other.

6. A navigation system according to claim 5, wherein said second map is less in scale than said first map.

## Patentansprüche

1. Navigationssystem mit:
a) einer Informationsspeichereinrichtung (3) zum Speichern von Kartendaten, wobei
a₁) die Kartendaten topographische Daten, Zeichendaten und Gebäudedaten enthalten,
b) einer Eingabeeinrichtung (11) zum Eingeben einer Position, und
c) einer Bildeinrichtung (55), wobei
c₁) die Bildeinrichtung (55) angepaßt ist zum Auslesen der Kartendaten aus der Informationsspeichereinrichtung (3) und Darstellen einer ersten Karte eines größeren Abschnittsbereichs an der Eingabeposition und um diese herum auf der Basis der Kartendaten,
c₂) die Bildeinrichtung (55) ferner vorgesehen ist zum Auslesen der Gebäudedaten der Kartendaten aus der Informationsspeichereinrichtung (3) und Darstellen einer zweiten Karte,
d) einer Steuereinrichtung (50) zum Steuern eines Übergangs zwischen der ersten Karte und der zweiten Karte, gekennzeichnet durch
e) eine Einrichtung zum selektiven Darstellen der ersten und der zweiten Karte in Antwort auf eine Eingabe des Fahrers,
f) wobei die Gehäusedaten Blockzahldaten kleinerer Abschnitte um die Eingabeposition enthalten und diese Daten getrennt von den verbleibenden Daten gespeichert werden, und durch
g) eine Einrichtung zum Darstellen der zweiten Karte, so daß die gelesenen Gebäudedaten auf der ersten Karte überlagert werden.

2. Navigationssystem nach Anspruch 1, wobei die Blockzahldaten aus Blockzahlen und Namen kleinerer Abschnitte zusammengesetzt sind.

3. Navigationssystem nach Anspruch 1 oder 2, wobei die Blockzahldaten auf der Basis administrativer Unterteilungen bestimmt werden.

4. Navigationssystem nach Anspruch 2 oder 3, wobei die Informationsspeichereinrichtung (3) Blockmusterdaten zusammen mit den Blockzahlen speichert, und daß die Bildeinrichtung (55) den Empfang eines Instruktionssignals von der Eingabeeinrichtung (11) beantwortet durch Lesen der Blockzahldaten der Kartendaten und der Blockmusterdaten von der Informationsspeichereinrichtung und zum Darstellen oder erneuten Zeichnen einer zweiten Karte mit den darin enthaltenen Blockzahlen und Blockmustern.

5. Navigationssystem nach einem der Ansprüche 1 bis 4, wobei die erste Karte und die zweite Karte sich hinsichtlich ihres Maßstabs voneinander unterscheiden.

6. Navigationssystem nach Anspruch 5, wobei der Maßstab der zweiten Karte kleiner ist als der der ersten Karte.

## Revendications

1. Système de navigation comprenant :
a) un moyen (3) de stockage d'informations pour stocker des données de carte; dans lequel
a₁) lesdites données de carte comprennent des données topographiques, des données de caractère et des données de logement;
b) un moyen d'entrée (11) pour entrer une position; et
c) des moyens d'image (55); dans lequel
c₁) lesdits moyens d'image (55) sont adaptés pour extraire lesdites données de carte dudit moyen (3) de stockage d'informations et afficher une première carte d'une grande superficie de section au niveau et autour de ladite position entrée en se basant sur lesdites données de carte;
c₂) ledit moyen d'image (55) est en outre adapté pour extraire les données de logement desdites données de carte dudit moyen (3) de stockage d'informations et afficher une deuxième carte;
d) un moyen de commande (50) pour commander une transition entre ladite première carte et ladite deuxième carte;
caractérisé par
e) un moyen agencé pour afficher de manière sélective lesdites première et deuxième cartes en réponse à une entrée du conducteur;
f) lesdites données de logement comprenant des données de numéros de blocs de sections plus petites autour de ladite position entrée, lesdites données étant stockées séparément des données restantes; et
g) un moyen agencé pour afficher ladite deuxième carte de sorte que les données de logement lues sont superposées sur la première carte.

2. Système de navigation selon la revendication 1, dans lequel lesdites données de numéros de blocs sont composées de numéros de blocs et de noms de plus petites sections.

3. Système de navigation selon la revendication 1 ou 2, dans lequel lesdites données de numéros de blocs sont déterminées sur la base de divisions administratives.

4. Système de navigation selon la revendication 2 ou 3, dans lequel ledit moyen (3) de stockage d'informations y stocke des données de motif de bloc avec les numéros de blocs, et le moyen d'image (55) est sensible à la réception d'un signal d'instruction provenant dudit moyen d'entrée (11) pour extraire dudit moyen de stockage d'informations les données de numéros de blocs des données de carte et les données de motifs de bloc, et pour représenter ou rédiger à nouveau une deuxième carte avec les numéros de blocs et les motifs de blocs contenus dedans.

5. Système de navigation selon l'une quelconque des revendications 1 à 4, dans lequel ladite première carte et ladite deuxième carte présentent une échelle différente.

6. Système de navigation selon la revendication 5, dans lequel ladite deuxième carte est d'échelle moindre que ladite première carte.
